# EUROPEAN PATENT SPECIFICATION

(11) **EP 2 023 570 B1**
(45) Date of publication and mention of the grant of the patent: **27.04.2011**
(21) Application number: 07721690.1
(22) Date of filing: 30.05.2007
(51) Int. Cl.: H04L 29/06, H04L 12/58

(54) **MESSAGE SERVICE ROUTING APPARATUS AND METHOD**
VORRICHTUNG UND VERFAHREN ZUM ROUTEN VON NACHRICHTENDIENSTEN
APPAREIL ET PROCEDE DE ROUTAGE DE MESSAGERIE

(30) Priority: 31.05.2006 CN 200610085159
(43) Date of publication of application: 11.02.2009
(73) Proprietor: Huawei Technologies Co., Ltd., Longgang District, Shenzhen Guangdong 518129 (CN)
(72) Inventor: CHENG, Hua, Shenzhen, Guangdong 518129 (CN); LAI, Hao, Shenzhen, Guangdong 518129 (CN); SHI, Youzhu, Shenzhen, Guangdong 518129 (CN)
(74) Representative: Casalonga, Axel
(86) International application number: PCT/CN2007/070067
(87) International publication number: WO 2007/143941

(56) References cited:
- WO-A-2004/071043
- WO-A1-2005/055549
- CN-A- 1 674 577
- GB-A- 2 398 458
- GB-A- 2 410 855
- US-A1- 2003 027 595
- US-A1- 2003 233 457
- US-A1- 2005 058 125
- US-A1- 2006 092 925
- US-A1- 2006 105 766

## Description

### Field of the Invention

The present invention relates to communication technologies and in particular to an apparatus and a method for routing message services.

### Background of the Invention

The IP Multimedia Subsystem (IMS) is a core subsystem in a Next Generation Network (NGN). With the packet domain as the bearer of its upper layer control signaling and media transport, with Session Initiation Protocol (SIP) as its service control protocol to make use of the simple implementation, easy scalability and convenient media combination of SIP, the IMS separates service control from bearer control and provides rich multimedia services.

Main functional entities in an IMS include a Call Session Control Function (CSCF) that controls user registration and sessions, an application server message service control unit that provides various service logic control functions, a Home Subscriber Server (HSS) that manages user subscription data in a centralized way, and a Media Gateway Control Function (MGCF) that interworks with circuit switched networks. A user accesses the network via a local P-CSCF of the visited location while session and service triggering control and service control interaction with the message service control unit are implemented by a home service node control unit in the registration location.

There are multiple types of message services provided in mobile and fixed networks. Some services are supported by both mobile and fixed networks, and some services are only supported by the mobile network or the fixed network. For example, text message services, like Short Message Service (SMS), are applied in mobile networks while instant message services are applied in fixed networks. Message services provided in a mobile network include text message service and Multimedia Message Service (MMS). Message services provided in a network include Instant Message (IM) and chat.

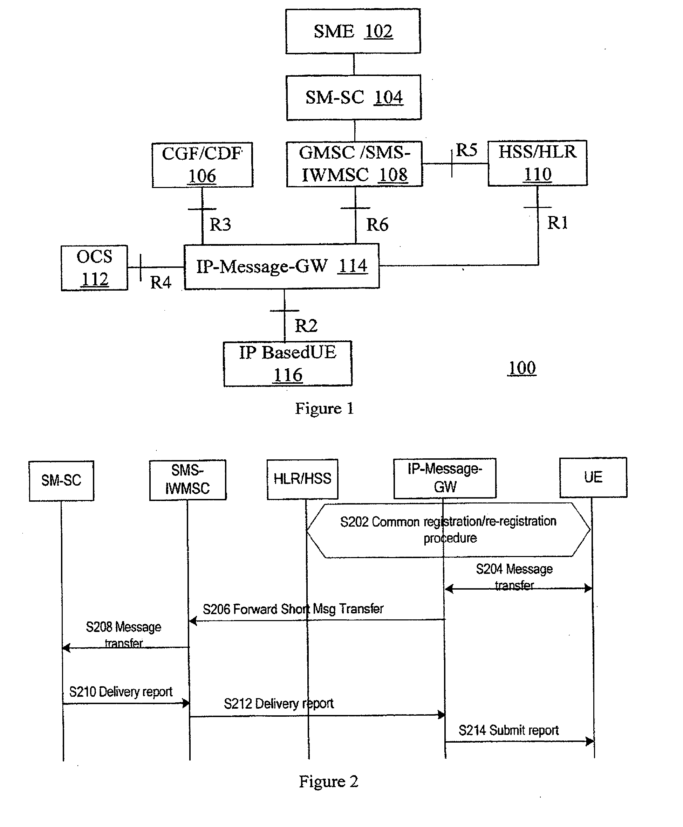

The following describes a technical solution in the prior art that implements text message service and MMS based on Internet Protocol (IP) with reference to Figures 1-3:

The 3rd Generation Partnership Project (3GPP) TS 23.804: *Technical Specification Group Services and System Aspects; Support of SMS and MMS over generic 3GPP IP access* defines an architecture for implementing IP-based text message service and MMS. Figure 1 shows an architecture 100 that implements text message service and MMS based on IP as defined in 3GPP TS 23.804.

In the network shown in Figure 1, the functions of main entities are as follows:

Short Message Service Center (SM-SC) 104, adapted to relay, store and forward short messages between a base station and a Short Message Entity (SME);

GMSC/SMS-IWMSC 108: MSC is a Mobile-services Switching Centre; SMS-GMSC is a Gateway MSC for Short Message Service; SMS-IWMSC is an Interworking MSC for Short Message Service;

IP-Message-GW 114: An IP Short Message Gateway that transfers short messages between a user equipment (UE) and the SM-SC.

The following describes a message flow in the network shown in Figure 1 with reference to Figure 2.

Figure 2 shows a message flow in the network shown in Figure 1. The message flow includes:

S202: A UE registers with the IP-Message-GW;

S204: The UE sends an SMS message to the IP-Message-GW;

S206: The IP-Message-GW transfers the SMS message to the SMS-IWMSC;

S208: The SMS-IWMSC transfers the SMS message to the SM-SC;

S210: The SM-SC sends a delivery report to the SMS-IWMSC;

S212: The SMS-IWMSC sends the delivery report to the IP-Message-GW;

S214: The IP-Message-GW sends the delivery report to the UE.

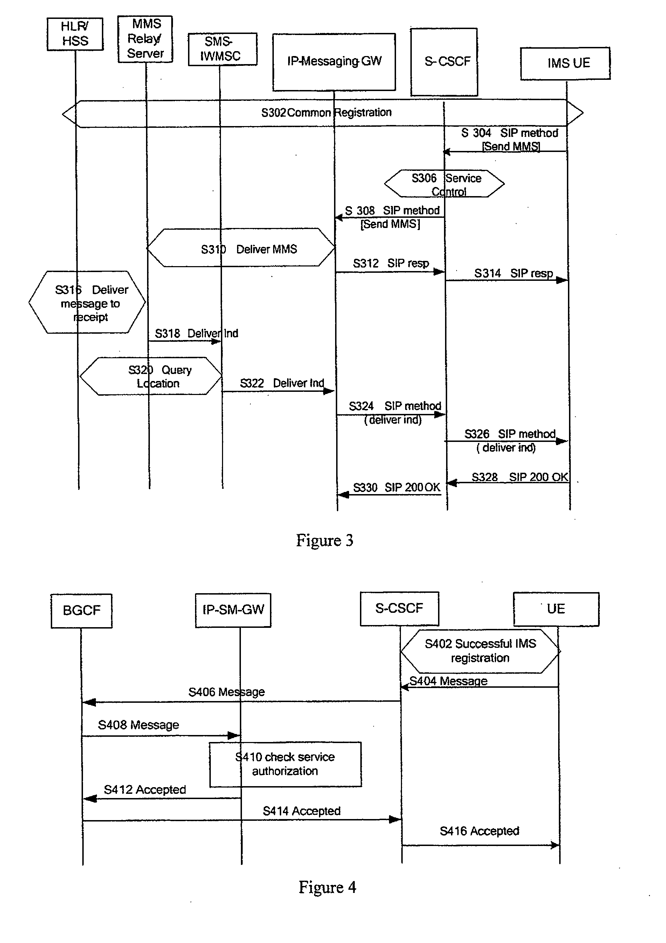

Figure 3 shows an MMS origination procedure in the network shown in Figure 1, including:

S302: Registration procedure;

S304-S308: A UE sends an MMS message to the IP-Messaging-GW;

S310: The IP-Messaging-GW sends the MMS message to the recipient UE;

S312-S314: A response message indicating successful delivery of the MMS message is received;

S316-S322: When the originating UE requests a delivery notification, a delivery notification is sent to the MMS originating UE via an SMS message; and

S324-S330: The delivery notification SMS is transmitted to the MMS originating UE.

When a UE accesses an network, it is needed to route the message to the IP-Message-GW. However, in the prior art, the technical solution proposed by 3GPP TS 23.804 does not solve the routing issue.

With reference to Figure 4, another technical solution in the prior art for implementing IP-based SMS and MMS is described in detail as follows.

The prior art also provides a routing method for message service and SMS interworking: UE originated message service information is routed to a Breakout Gateway Control Function (BGCF); the BGCF routes the message service information to the IP-SM-GW and finally the IP-SM-GW transfers the message service information to the SMS network of the message terminator.

Figure 4 shows a successful mobile originated (MO) message to SMS submit procedure in the network system according to the routing method for message service and SMS interworking in the prior art. The procedure includes:

S402: A UE is registered in the network successfully;

S404: The UE sends message service information to the S-CSCF;

S406: The S-CSCF checks the receiver identifier carried in the message service information and if the S-CSCF does not find a SIP Uniform Resource Identifier (SIP URI) associated with the receiver identifier, the S-CSCF routes the message service information to the BGCF;

S408: The BGCF selects to transmit the message service information to the IP-SM-GW according to a local policy;

S410: The IP-SM-GW performs service authentication; and

S412-S416: The IP-SM-GW forwards the message indicating that information is received to the UE.
Published UK patent application GB-A-2 410 855 discloses a telecommunication system for establishing a communication session between two terminals 1 and 3. Information relating to the communication session exchanged between the terminals 1,3 includes a signaling components transmitted in a control plane and data components transmitted in a user plane.
Published US patent application US 2003/027595 A1 discloses a communication system includes User Equipment, Radio Access Network, a packet-switched domain, an IP Multimedia Subsystem, a Charging Gateway Function, an EIR, a T-SGW, and a R-SGW The CS domain includes an interworking Mobile Switching Center.
Published US patent application US 2003/233457 A1 discloses a signaling framework for wireless communications over an air interface of a wireless network comprising an application layer, a wireless adaptation layer, and a session control protocol lay.
Published US patent application US 2006/015766 A1 discloses a method for delivering a call request to a mobile unit. A call request is received and routed to a call delivery application server, which determines which of the communication network to deliver the call request.
Published US patent application US 2006/092925 A1 discloses a temporary address assignment server in an IP network assigning a temporary number to use for setting up a mobile terminated call to a mobile station roaming in an IP network.
Published US patent application US 2005/058125 A1 discloses a mechanism for providing a connection from an IP-based network to a circuit-switched network, such as a GSM network.
Published PCT application WO 2004/071043 A disclosed a method to implement interworking of addressing schemes in a communication network using at least two different addressing schemes.
Published UK application GB-A-2 398 458 discloses a method of setting up a session between peer nodes of a communication system, said session extending at least in part across a circuit switched access network.
Published PCT application WO 2005 055549 A1 discloses a system for deploying at least one service in response to a communications session message. The system comprised a SIP server responsive to the session message to identify one of a plurality of servlets.

However, the above technical solution only solves the routing for interworking between non-session based message service and SMS. The technical solution neither solves the problem of interworking between a session based message service and MMS nor solves the problem of interworking between a session based message service and a message service in a heterogeneous network such as the traditional circuit switched domain.

### Summary of the Invention

Embodiments of the invention intend to provide an apparatus and a method for routing message services so as to solve the routing of a message by the network to the IP-Message-GW when a user equipment (UE) accesses, solve the problem of interworking between a non-session based message service and the multimedia message service, and solve the problem of interworking between a session based message service and a message service in a heterogeneous network such as a traditional circuit switched network.

The purpose of embodiments of the invention is implemented through the following technical solution:

A method of message service routing in IMS network includes:
sending , by a user terminal or a first message service application server of the IMS network, a request, carrying an identification of a message service information receiver and a message service information corresponding to the message service information receiver;
determining , by a second message service application server of the IMS network, whether the message service information receiver is a traditional CS domain user based on the identification of the message service information receiver, wherein the step of determining whether the message service information receiver is a traditional CS domain user further includes: analyzing the identification of the message service information receiver by querying Domain Name Server database or Telephone Number Mapping database or checking the local configuration of the second message service application server;
determining , by the second message service application server, the message service information is in-session message service information or outside-session message service information according to message service session negotiate information of the request; and
transmitting, by the second message service application server, the message service information to a CS domain network which the message service information receiver belongs to according to whether the message service information is in-session message service information or outside-session message service information when the message service information receiver is a traditional CS domain user.

A message service routing system includes:
a message service information transmitting module, configured to send a request, wherein the request carries a message service information associating a message service information receiver;
a message service information route selecting module, configured to receive the request and send the message service information carried in the request, further including:
   a message service information receiver home network judging module, configured to determine that the message service information receiver belongs to a CS domain network based on analyzing a message service information receiver identifier carried in the request by querying Domain Name Server database or Telephone Number Mapping database or checking the local configuration of the second message service application server; and
   a message service information transfer method judging module, configured to judge whether the message service information is transferred in session or outside session;
a message service information interworking interface module, configured to receive the message service information and send the message service information to the CS domain network which the message service information receiver belongs to according to whether the message service information is transferred in session or outside session when the message service information receiver belongs to a CS domain network;
wherein the message service information transmitting module is located in a user terminal or a first message service application server of an IMS network and the message service information route selecting module and the message service information interworking interface module are located in a second message service application server of the IMS network.

With the above technical solution, embodiments of the invention achieve the following technical effects:
EP 07 721 690.1

The technical solution provided by embodiments of the invention judges that the home network of the message service information receiver is a traditional circuit switched network according to the message service information receiver identifier, and judges whether message service information is carried via a session request message or an outside session message, and then transfers the message service information to the home short message network of the message service information receiver. With the technical solution, the network is able to route a message to the IP-Messaging-GW when a UE accesses. The technical solution also solves the problem of interworking between non-session based message service and the multimedia message service as well as the interworking between session-based message service and the message service in a heterogeneous network such as the traditional circuited switched domain.

The characteristics and advantages of the invention will be detailed in the following description and some of them are apparent from the description or are understandable via implementation of the invention. The purpose and other advantages of the invention may be achieved and obtained through the structures particularly noted in the description, the claims and the accompanying drawings herein.

### Brief Description of the Drawings

The drawings herein are provided for better understanding of the present invention and they constitute a part of the application. The exemplary drawings and their descriptions are used to explain the invention and should not be understood as any limitation to the invention. In the accompanying drawings:

Figure 1 shows the architecture for implementing IP-based SMS and MMS as defined in 3GPP TS 23.804 in the prior art;

Figure 2 shows a message flow in the network shown in Figure 1;

Figure 3 shows an MMS origination procedure in the network shown in Figure 1;

Figure 4 shows a successful MO message to SMS submit procedure in the network system proposed by Ericsson;

Figure 5 shows a message service routing apparatus 500 according to an embodiment of the present invention;

Figure 6 shows a message service routing method according to an embodiment of the present invention;

Figure 7 shows a specific implementation of the message service routing method shown in Figure 6;

Figure 8 shows a message flow according to embodiment 101 of the present invention;

Figure 9 shows a message flow according to embodiment 102 of the present invention;

Figure 10 shows a message flow according to embodiment 103 of the present invention;

Figure 11 shows a message flow according to embodiment 104 of the present invention;

Figure 12 shows a message flow according to embodiment 105 of the present invention;

Figure 13 shows a message flow according to embodiment 111 of the present invention;

Figure 14 shows a message flow according to embodiment 112 of the present invention;

Figure 15 shows a message flow according to embodiment 113 of the present invention;

Figure 16 shows a message flow according to embodiment 206 of the present invention;

Figure 17 shows a message flow according to embodiment 201 of the present invention;

Figure 18 shows a message flow according to embodiment 202 of the present invention;

Figure 19 shows a message flow according to embodiment 205 of the present invention;

Figure 20 shows a message flow according to embodiment 207 of the present invention;

Figure 21 shows a message flow according to embodiment 208 of the present invention;

Figure 22 shows a message flow according to embodiment 209 of the present invention;

Figure 23 shows a message flow according to embodiment 211 of the present invention;

Figure 24 shows a message flow according to embodiment 212 of the present invention;

Figure 25 shows a message flow according to embodiment 213 of the present invention;

Figure 26 shows a message flow according to embodiment 203 of the present invention; and

Figure 27 shows a message flow according to embodiment 204 of the present invention.

### Detailed Description of the Embodiments

The following describes the embodiments of the invention with reference to the accompanying drawings.

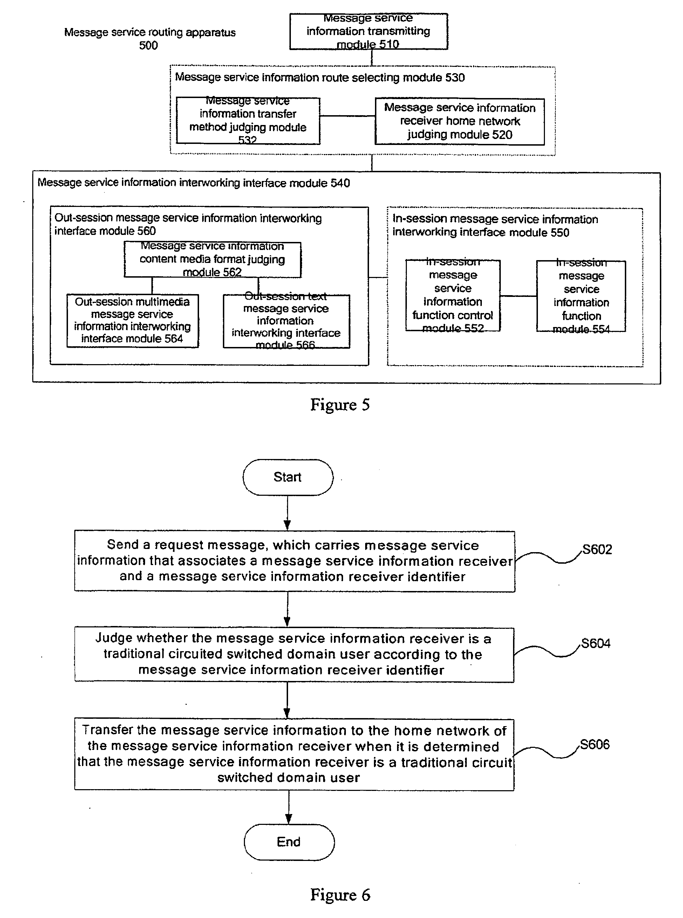

Figure 5 shows a message service routing apparatus 500 according to an embodiment of the invention.

As shown in Figure 5, a message service routing apparatus 500 according to an embodiment of the invention includes the following modules:
a message service information transmitting module 510, configured in a user terminal or message service application server, adapted to send message service information to a network;
a message service information route selecting module 530, adapted to judge whether a home network, to which a receiver of message service information belongs, is a heterogeneous network, such as a traditional circuit switched domain, and if the receiver of message service information is a heterogeneous network, send the message service information to a message service information interworking interface module 540; and
a message service information interworking interface module 540, adapted to route message service information to the home network of the message service information receiver.

The message service information route selecting module 530 includes:
a message service information transfer method judging module 532, adapted to judge whether to transfer message service information within a session or in message signaling (outside the session); and
a message service information receiver home network judging module 520, adapted to judge whether the home network of the message service information receiver is an IP network or a heterogeneous network such as a traditional circuit switched network.

When the message service information transfer method judging module 532 judges that the message service information is outside the session, the message service information route selecting module 530 includes at least one of the following modules:
a first transmitting module, adapted to enable the message service information route selecting module 530 to transfer the out-session message service information to an out-session multimedia message service information interworking interface module, which sends the out-session message service information to the home multimedia message service network of the message service information receiver;
a second transmitting module, adapted to enable the message service information route selecting module 530 to transfer the out-session message service information to an out-session text message service information interworking interface module, which sends the out-session message service information to the home text message service network of the message service information receiver;
a third transmitting module, adapted to enable the message service information route selecting module to transfer the out-session message service information to a message service information content media format judging module, which checks the content format of the out-session message service information and sends the out-session message service information in the multimedia format to the out-session multimedia message service information interworking interface module, which sends the out-session message service information to the home multimedia message service network of the message service information receiver;
a fourth transmitting module, adapted to enable the message service information route selecting module 530 to transfer the out-session message service information to a message service information content media format judging module, which checks the content format of the out-session message service information and sends the out-session message service information in the multimedia format to the out-session text message service information interworking interface module, which sends the out-session message service information to the home text message service network of the message service information receiver;
a fifth transmitting module, adapted to enable the message service information route selecting module 530 to transfer the out-session message service information to a message service information content media format judging module, which checks the content format of the out-session message service information and sends the out-session message service information in the text format to the out-session text message service information interworking interface module, which sends the out-session message service information to the home text message service network of the message service information receiver; and
a sixth transmitting module, adapted to enable the message service information route selecting module to transfer the out-session message service information to a message service information content media format judging module, which checks the content format of the out-session message service information and sends the out-session message service information in the text format to the out-session multimedia message service information interworking interface module, which sends the out-session message service information to the home multimedia message service network of the message service information receiver.

The message service information interworking interface module 540 includes:
an in-session message service information interworking interface module 550, adapted to route a message service information transferred within a session to the home network of the message service information receiver; and
an out-session message service information interworking interface module 560, adapted to route a message service information transferred outside a session to the home network of the message service information receiver.

The in-session message service information interworking interface module 550 includes:
an in-session message service information control module 552, adapted to set up, tear down, and manage sessions between the message service information transmitting module and the in-session message service information module; and
an in-session message service information function module 554, adapted to send in-session message service information to an in-session message service information transmitting interface module; and
an in-session message service information transmitting interface module 556, adapted to send message service information transferred within a session to the home message service network of the message service information receiver.

The out-session message service information interworking interface module 560 includes:
a message service information content media format judging module 562, adapted to check the content format of the message service information;
an out-session multimedia message service information interworking interface module 564, adapted to send message service information in the multimedia format outside a session to the home multimedia message service network of the message service information receiver; and
an out-session text message service information interworking interface module 566, adapted to send a message service information in the text format outside a session to the home text message service network of the message service information receiver.

In the message service routing apparatus 500 according to an embodiment of the invention, the message service information transmitting module 510 sends a message service information to the message service information route selecting module 530, the message service information route selecting module 530 sends the message service information whose receiver is a heterogeneous network such as a traditional circuit switched network to the message service information interworking interface module 540, and the message service information interworking interface module 540 sends the message service information to the home short message service network of the message service receiver.

The in-session message service information transmitting interface module 556 is able to differentiate the format type of a message service information and send the message service information to the home network of the message service information receiver.

In the message service route selecting module 530, message service information may be transferred along the following paths:

Message service information is routed to the message service information receiver home network judging module 520, which forwards the message service information to the message service information interworking interface module 540;

Message service information is routed to the message service information receiver home network judging module 520, which forwards the message service information to the message service information transfer method judging module 532, which forwards the message service information to the message service information interworking interface module 540; and

Message service information is routed to the message service information transfer method judging module 532, which forwards the message service information to the message service information receiver home network judging module 520, which forwards the message service information to the message service information interworking interface module 540.

In the message service information interworking interface module 540, message service information may be transferred along the following paths:

Message service information is routed to the in-session message service information interworking interface module 550, which forwards the message service information to the home short message service network of the message service information receiver; and

Message service information is routed to the out-session message service information interworking interface module 560, which forwards the message service information to the home short message service network of the message service information receiver.

In the out-session message service interworking interface module 560, message service information may be transferred along the following paths:

Message service information bypasses the message service information content media format judging module 562 and is transferred to the out-session multimedia message service information interworking interface 564, which forwards the message service information to the home multimedia message service network of the message service information receiver;

Message service information bypasses the message service information content media format judging module 562 and is transferred to the out-session text message service information interworking interface 566, which forwards the message service information to the home text message service network of the message service information receiver;

Message service information is transferred to the message service information content media format judging module 562, which forwards the message service information to the out-session multimedia message service information interworking interface module 564, which forwards the message service information to the home multimedia message service network of the message service information receiver; and

Message service information is transferred to the message service information content media format judging module 562, which forwards the message service information to the out-session text message service information interworking interface module 566, which forwards the message service information to the home text message service network of the message service information receiver.

Figure 6 shows a message service routing method according to an embodiment of the invention.

As shown in Figure 6, a message service routing method according to an embodiment of the invention includes the following steps:

S602: A request, which carries a message service information that associates the message service information receiver and a message service information receiver identifier, is sent. The request may be out-session message service information or a session request message.

S604: It is judged whether the message service information receiver is a heterogeneous network such as a traditional circuit switched domain user according to the message service information receiver identifier.

S606: The message service information is routed to the home short message service network of the message service information receiver when it is determined that the message service information receiver is a traditional circuit switched domain user.

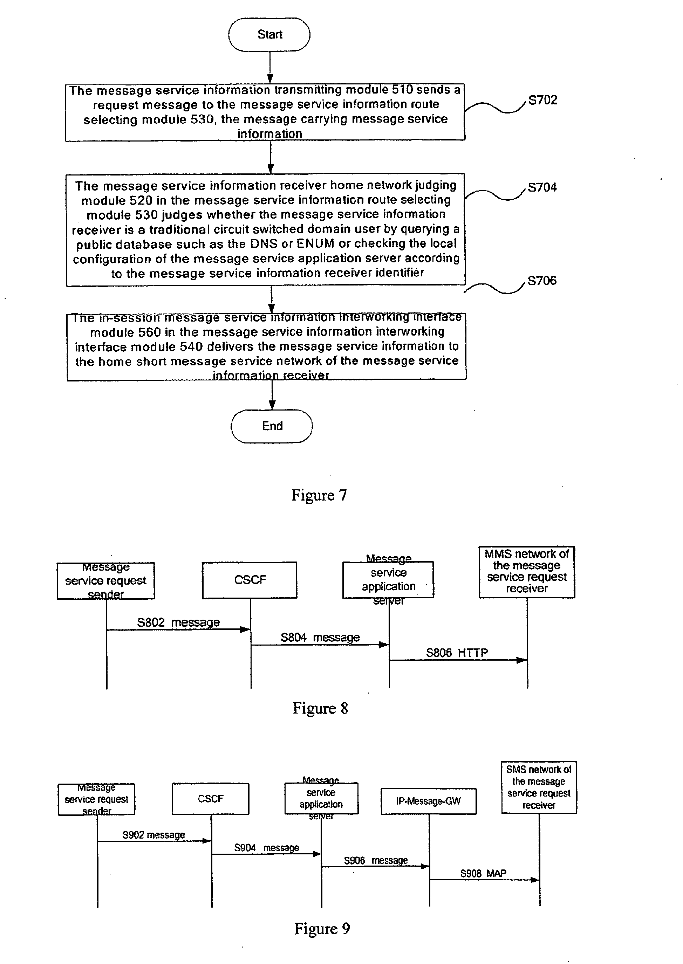

Figure 7 shows a specific implementation of the message service routing method shown in Figure 6.

Optionally, as shown in Figure 7, a detail implementation scheme of the message service routing method according to an embodiment of the invention is as follows:

S702: The message service information transmitting module 510 sends a request to the message service information route selecting module 530. The request carrying a message service information that associates the message service information receiver and the message service information receiver identifier.

S704: The message service information receiver home network judging module 520 in the message service information route selecting module 530 judges whether the home network of the message service information receiver is a heterogeneous network such as a traditional circuit switched domain by querying a public database such as Domain Name Server (DNS) or Telephone Number Mapping (ENUM) or checking the local configuration of the message service application server according to the message service information receiver identifier. The message service information transfer method judging module 532 in the message service information route selecting module 530 is able to judge whether the message service information is in-session message service information according to the type of the message that carries the message service information. The message service information route selecting module 530 may transfer message service information to the message service information interworking interface module 540 in the following methods:

The message service information receiver home network judging module 520 transfers the message service information of the home network to which the receiver of the message services belongs is a heterogeneous network such as a traditional circuit switched domain to the in-session message service information interworking interface module 550;

The message service information receiver home network judging module 520 transfers the message service information of the home network to which the receiver of the message services belongs is a heterogeneous network such as a traditional circuit switched domain to the out-session message service information interworking interface module 560;

The message service information receiver home network judging module 520 transfers the message service information of the home network to which the receiver of the message services belongs is a heterogeneous network such as a traditional circuit switched domain to the message service information transfer method judging module 532, which forwards the message service information transferred within the session to the in-session message service information interworking interface module 550;

The message service information receiver home network judging module 520 transfers the message service information of the home network to which the receiver of the message services belongs is a heterogeneous network such as a traditional circuit switched domain to the message service information transfer method judging module 532, which forwards the message service information transferred outside the session to the out-session message service information interworking interface module 560;

The message service information transfer method judging module 532 judges whether the message service information is in-session or out-session and transfers the message service information to the message service information receiver home network judging module 520, which judges whether the home network of the receiver is a heterogeneous network such as a traditional circuit switched network and forwards the in-session message service information of the home network whose receiver is a heterogeneous network such as a traditional circuit switched network to the in-session message service information interworking interface module 550; and

The message service information transfer method judging module 532 judges whether the message service information is in-session or out-session and transfers the message service information to the message service information receiver home network judging module 520, which judges whether the home network to which the receiver of the message services belongs is a heterogeneous network such as a traditional circuit switched network and forwards the out-session message service information of the home network to which the receiver of the message services belongs is a heterogeneous network such as a traditional circuit switched network to the out-session message service information interworking interface module 560.

S706: The in-session message service information interworking interface module 550 in the message service information interworking interface module 540 may transfer the message service information to the home short message service network of the message service information receiver in the following methods:

The in-session message information interworking interface module 550 sends a response to the message service information session request to the message service information transmitting module 510 to set up a session between the in-session message service information function module 554 and the message service information transmitting module 510. The message service information transmitting module 510 sends a message service information to the in-session message service information interworking interface module 550 within the session. The in-session message service information interworking interface module 550 forwards the message service information to the home multimedia message service network or text message service network of the message service information receiver.

The in-session message information interworking interface module 550 sends a response to the message service information session request to the message service information transmitting module 510 to set up a session between the in-session message service information function module 554 and the message service information transmitting module 510. The message service information transmitting module 510 sends a message service information to the in-session message service information interworking interface module 550 within the session. The in-session message service information interworking interface module 550 forwards the message service information to the out-session message service information interworking interface module 560, which delivers the message service information to the home short message service network of the message service information receiver.

The in-session message service information function control module 552 sends a control messagc which carries the information of the message service information session request to the in-session message service information function module 554, and requests the in-session message service information function control module 554 to provide a resource for a message service information session. The in-session message service information function module 554 assigns the resource required by the message service information session, and sends a success response which carries a response information of message service information session request to the in-session message service information function control module 552 to set up a session between the in-session message service information function module 554 and the message service information transmitting module 510. The message service information transmitting module 510 sends a message service information to the in-session message service information function module 554 within the session. The in-session message service information interworking interface module 550 delivers the message service information to the home multimedia message service network or text message service network of the message service information receiver in the following methods:

Upon reception of message service information within the session, the in-session message service information function module 554 sends a notification message to the in-session message service information function control module 552, and notifies the in-session message service information function control module 552 of the coming of in-session message service information. The in-session message service information function control module 552 sends an indication to the in-session message service information function module 554, and instructs the in-session message service information function module 554 to send the message service information to the in-session message service transmitting interface module 556. The in-session message service transmitting interface module 556 delivers the message service information to the home multimedia message service network or text message service network of the message service information receiver.

Upon reception of message service information within the session, the in-session message service information function module 554 extracts the message service information and sends the extracted message service information to the in-session message service information transmitting interface module 556, which delivers the message service information to the home multimedia message service network or text message service network of the message service information receiver.

Optionally, if the session request message carries call information in addition to message service information, the call information is sent to the call request receiver and the response information to the message service information session request is carried in the call session setup success response message and sent to the message service information transmitting module 510.

The out-session message service information interworking interface module 560 in the message service information interworking interface module 540 may deliver the message service information to the home message service network of the short message service information receiver in the following manners:

Bypassing the message service information content media format judging module 562, message service information in text format and multimedia format is delivered by the out-session multimedia message service information interworking interface module 564 to the home multimedia message service network of the message service information receiver.

Bypassing the message service information content media format judging module 562, message service information in text format and multimedia format is delivered by the out-session text message service information interworking interface module 566 to the home text message service network of the message service information receiver.

The message service information content media format judging module 562 transfers message service information in the multimedia format to the out-session multimedia message service information interworking interface module 564, which delivers the message service information in the multimedia format to the home multimedia message service network of the message service information receiver.

The message service information content media format judging module 562 transfers message service information in the multimedia format to the out-session text message service information interworking interface module 566, which delivers the message service information in the multimedia format to the home text message service network of the message service information receiver.

The message service information content media format judging module 562 transfers message service information in the text format to the out-session text message service information interworking interface module 566, which delivers the message service information in the text format to the home text message service network of the message service information receiver.

The message service information content media format judging module 562 transfers message service information in the text format to the out-session multimedia message service information interworking interface module 564, which delivers the message service information in the text format to the home multimedia message service network of the message service information receiver.

The following describes multiple embodiments of the invention when the message service information transmitting module transmits out-session message service information. In these embodiments, the receiver network is a multimedia message service network or a text message service network. The message service information is routed in the same routing principle except that the receiver network is different. Therefore, one routing method is provided with one embodiment in a multimedia message service network or a text message service network, for the implementation of the other scenario is known by deduction.

### Embodiment 101

Figure 8 shows a message flow according to embodiment 101 of the invention.

The message service information receiver home network judging module 520 is placed in the message service application server entity; the message service information route selecting module 530 is placed in the message service application server entity.

The message flow of the embodiment is as follows:

S802: The message service information transmitting module 510 sends out-session message service information, such as a message, to the Call Session Control Function (CSCF) and the out-session message service information carries message service information content of the multimedia format. The destination identifier of the message is the identifier of the message service application server. For example, the Request-URI of the message is as_message@.domain.cn. The message header carries the identifier of the message receiver, such as message-destination: 12345678@cs.domain.cn.

S804: The CSCF routes the message service information to the message service application server according to the destination identifier in the message service information.

S806: The message service information receiver home network judging module 520 in the message service application server judges that the receiver network of the message service information is a traditional circuit switched network according to the message service information receiver identifier. The message service information transfer method judging module 532 judges that the message service information is transferred outside the session. Optionally, the sequence of the two judgments may be inversed. The message service information content media format judging module 562 judges that the message service information content is of the multimedia type. The out-session multimedia message service information interworking interface module 564 in the message service application server transfers the message service information to the home multimedia message service network of the message service information receiver over the Hypertext Transfer Protocol (HTTP).

### Embodiment 102

Figure 9 shows a message flow according to the embodiment 102 of the invention.

The message service information receiver home network judging module 520 is placed in the message service application server entity; the message service information transfer method judging module 532 is placed in the message service application server entity; the message service information content media format judging module 562 is placed in the message service application server entity; the out-session text message service information interworking interface module 566 is placed in another entity, such as the IP-Messaging-GW.

The message flow of the embodiment is as follows:

S902: The message service information transmitting module 510 sends out-session message service information, such as a message, to the CSCF, and the out-session message service information carries the message service information content of the text format. The destination identifier of the message is the identifier of the message service application server. For example, the Request-URI of the message is as_message@.domain.cn. The message header carries the identifier of the message receiver, such as message-destination: 12345678@cs.domain.cn.

S904: The CSCF routes the message service information to the message service application server according to the destination identifier in the message service information.

S906: The message service information receiver home network judging module 520 in the message service application server judges that the receiver network of the message service information is a traditional circuit switched network according to the message service information receiver identifier. The message service information transfer method judging module 532 judges that the message service information is transferred outside the session. Optionally, the sequence of the two judgments may be inversed. The message, service information content media format judging module 562 judges that the message service information content is of the text type. The message service application server determines that the out-session text message service information interworking interface module 566 is in another entity according to the local configuration. The message service application server transfers the message service information to the home entity of the out-session text message service information interworking interface module 566, the message carrying routing information, for example, an additional message-route: text message service_interface@ip-messaging-gw.home.cn.

S908: The IP-Messaging-GW transfers the message service information to the home text message service network of the message service information receiver over the Mobile Application Part (MAP).

### Embodiment 103

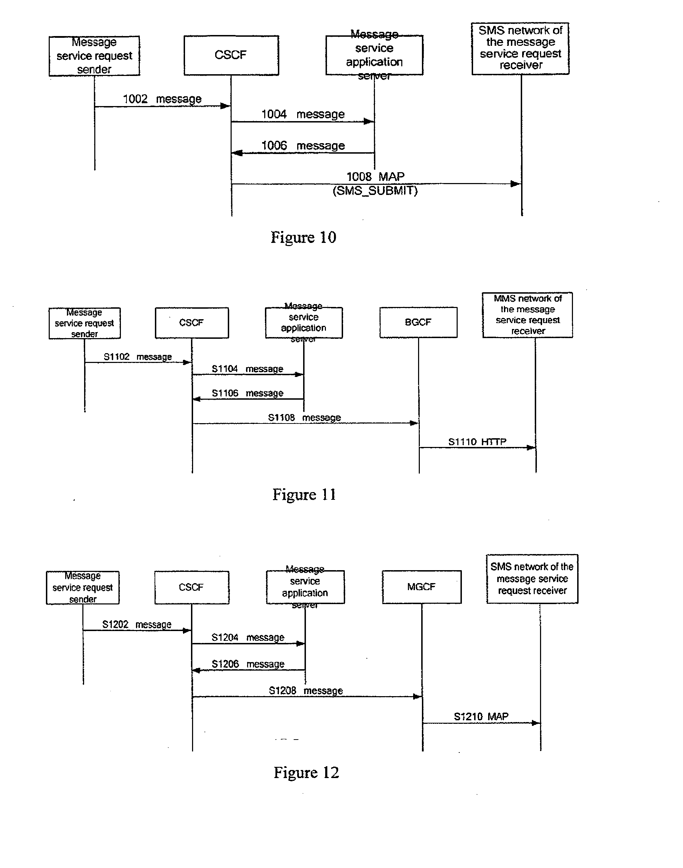

Figure 10 shows a message flow according to embodiment 103 of the invention.

The message service information receiver home network judging module 520 is placed in the message service application server entity; the message service information transfer method judging module 532 is placed in the message service application server entity; the message service information content media format judging module 562 is placed in the message service application server entity; the out-session multimedia message service information interworking interface module 564 is placed in the CSCF entity.

The message flow of the embodiment is as follows:

S1002-S1004: Similar to S802-S804 in embodiment 101. The message service information is in the text format and the message carries message service information content in the text format.

S 1006: The message service information receiver home network judging module 520 in the message service application server judges that the receiver network of the message service information is a traditional circuit switched network according to the message service information receiver identifier. The message service information transfer method judging module 532 judges that the message service information is transferred outside the session. Optionally, the sequence of the two judgments may be inversed. The message service information content media format judging module 562 judges that the message service information content is of the text type. The message service application server determines that the out-session text message service information interworking interface module 566 is in the CSCF entity according to the local configuration. The message service application server transfers the message service information to the CSCF entity, the message carrying routing information, for example, an additional message-route: text message service _interface@s-cscf.home.cn.

S1008: The CSCF determines that the message service information needs to be transferred to the home text message service network of the message service information receiver via the local out-session text message service information interworking interface module 566. The CSCF transfers the message service information to the home text message service network of the message service information receiver over MAP.

Based on this embodiment, the procedures when the modules are distributed as follows can be deduced:

1) The message service information receiver home network judging module 520 and the message service information transfer method judging module 532, the message service information content media format judging module 562, the out-session multimedia message service information interworking interface module 564, and the out-session text message service information interworking interface module 566 may be placed in network entities as follows according to the order of the message flow: the network entity in the first position is the message service application server and the network entity in the second position is the CSCF.

2) The distribution rule is as follows:

When the message service information receiver home network judging module 520 is placed in the message service application server entity and the out-session multimedia message service information interworking interface module 564 or the out-session text message service information interworking interface module 566 is placed in the CSCF entity, the message service information transfer method judging module 532 and the message service information content media format judging module 562 may be placed in either of the network entities described in 1) and the home network entity of the message service information transfer method judging module 532 is in a position ahead of or in a same position as the home network entity of the message service information content media format judging module 562; and

When the message service information receiver home network judging module 520 is placed in the CSCF and the message service information transfer method judging module 532 is placed in the message service application server entity, and the out-session multimedia message service information interworking interface module 564 or the out-session text message service information interworking interface module 566 is placed in the CSCF entity, the message service information content media format judging module 562 is placed in the CSCF entity.

### Embodiment 104

Figure 11 shows a message flow according to embodiment 104 of the invention.

The message service information receiver home network judging module 520 is placed in the message service application server entity; the message service information transfer method judging module 532 is placed in the message service application server entity; the message service information content media format judging module 562 is placed in the message service application server entity; the out-session multimedia message service information interworking interface module 564 is placed in the Breakout Gateway Control Function (BGCF) entity.

The message flow of the embodiment is as follows:

S1102-S1104: Similar to S802-S804 in embodiment 101.

S 1106: The message service information receiver home network judging module 520 in the message service application server judges that the receiver network of the message service information is a traditional circuit switched network according to the message service information receiver identifier. The message service information transfer method judging module 532 judges that the message service information is transferred outside the session. Optionally, the sequence of the two judgments may be inversed. The message service information content media format judging module 562 judges that the message service information content is of the multimedia type. The message service application server determines that the out-session multimedia message service information interworking interface module 564 is in the BGCF entity according to the local configuration. The message service application server transfers the message service information to the CSCF, the message carrying routing information, for example, an additional message-route: msm_interface@bgcf.home.cn.

S1108: The CSCF transfers the message service information to the BGCF according to the routing information carried in the message service information.

S1110: The BGCF determines that the message service information needs to be transferred to the home multimedia message service network of the message service information receiver via the local out-session multimedia message service information interworking interface module 564. The MGCF transfers the message service information to the home multimedia message service network of the message service information receiver over HTTP.

Based on this embodiment, the procedures when the modules are distributed as follows can be deduced:

1) The message service information receiver home network judging module 520 and the message service information transfer method judging module 532, the message service information content media format judging module 562, the out-session multimedia message service information interworking interface module 564, and the out-session text message service information interworking interface module 566 may be placed in network entities as follows according to the order of the message flow: the network entity in the first position is the message service application server, the network entity in the second position is the CSCF, and the third position is the BGCF.

2) The distribution rule is as follows:

When the message service information receiver home network judging module 520 is placed in the message service application server entity and the out-session multimedia message service information interworking interface module 564 or the out-session text message service information interworking interface module 566 is placed in the BGCF entity, the message service information transfer method judging module 532 and the message service information content media format judging module 562 may be placed in any of the network entities described in 1) and the home network entity of the message service information transfer method judging module 532 is in a position ahead of or in a same position as the home network entity of the message service information content media format judging module 562; and

When the message service information receiver home network judging module 520 is placed in the CSCF entity and the message service information transfer method judging module 532 is placed in the message service application server entity, and the out-session multimedia message service information interworking interface module 564 or the out-session text message service information interworking interface module 566 is placed in the BGCF entity, the message service information content media format judging module 562 may be placed in any network entity behind the CSCF entity.

### Embodiment 105

Figure 12 shows a message flow according to embodiment 105 of the invention.

The message service information receiver home network judging module 520 is placed in the message service application server entity; the message service information transfer method judging module 532 is placed in the message service application server entity; the message service information content media format judging module 562 is placed in the message service application server entity; the out-session multimedia message service information interworking interface module 564 is placed in the Media Gateway Control Function (MGCF) entity.

The message flow of the embodiment is as follows:

S1202-S1204: Similar to S902-S904 in embodiment 102.

S1206: The message service information receiver home network judging module 520 in the message service application server judges that the receiver network of the message service information is a traditional circuit switched network according to the message service information receiver identifier. The message service information transfer method judging module 532 judges that the message service information is transferred outside the session. Optionally, the sequence of the two judgments may be inversed. The message service information content media format judging module 562 judges that the message service information content is of the text type. The message service application server determines that the out-session text message service information interworking interface module 566 is in the MGCF entity according to the local configuration. The message service application server transfers the message service information to the CSCF, the message carrying routing information, for example, an additional message-route: text message service_interface@mgcf.home .en.

S1208: The CSCF sends the message service information to the MGCF according to the routing information carried in the message service information, or sends the message service information to the MGCF via the BGCF.

S1008: The MGCF determines that the message service information needs to be transferred to the home text message service network of the message service information receiver via the local out-session text message service information interworking interface module 566. The MGCF transfers the message service information to the home text message service network of the message service information receiver over MAP.

Based on this embodiment, the procedures when the modules are distributed as follows can be deduced:

1) The message service information receiver home network judging module 520 and the message service information transfer method judging module 532, the message service information content media format judging module 562, the out-session multimedia message service information interworking interface module 564, and the out-session text message service information interworking interface module 566 may be placed in network entities as follows according to the order of the message flow: the network entity in the first position is the message service application server, the network entity in the second position is the CSCF, and the third position is the BGCF, and the network entity in the fourth position is the MGCF; or the network entity in the first position is the message service application server, the network entity in the second position is the CSCF, and the network entity in the third position is the MGCF.

2) The distribution rule is as follows:

When the message service information receiver home network judging module 520 is placed in the message service application server entity and the out-session multimedia message service information interworking interface module 564 or the out-session text message service information interworking interface module 566 is placed in the MGCF entity, the message service information transfer method judging module 532 and the message service information content media format judging module 562 may be placed in any of the network entities described in 1) and the home network entity of the message service information transfer method judging module 532 is in a position ahead of or in a same position as the home network entity of the message service information content media format judging module 562; and

When the message service information receiver home network judging module 520 is placed in the CSCF entity and the message service information transfer method judging module 532 is placed in the message service application server entity, and the out-session multimedia message service information interworking interface module 564 or the out-session text message service information interworking interface module 566 is placed in the MGCF entity, the message service information content media format judging module 562 may be placed in any network entity behind the CSCF entity.

### Embodiment 111

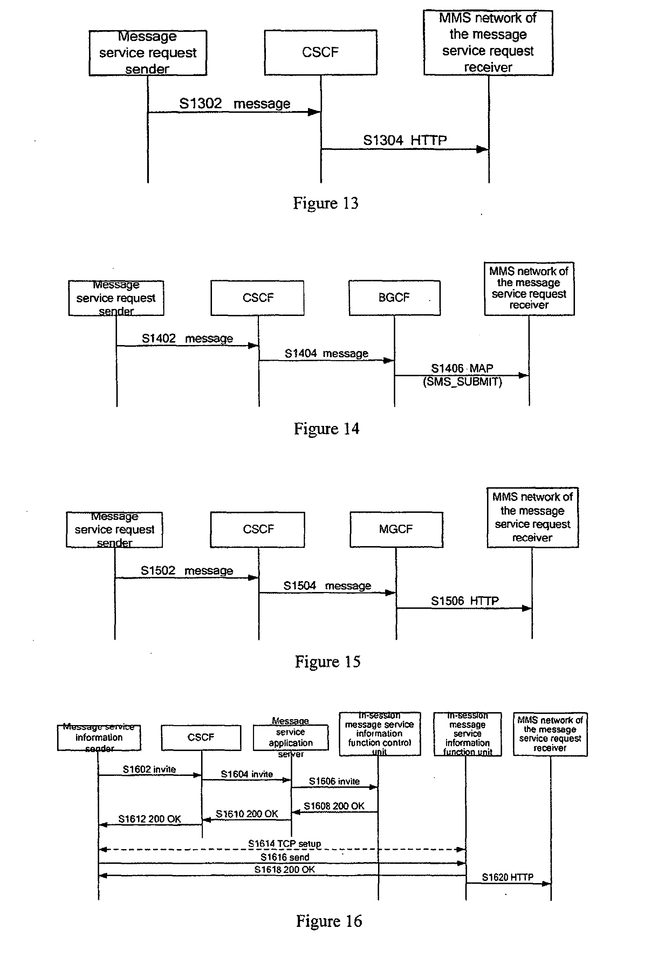

Figure 13 shows a message flow according to embodiment 111 of the invention.

The message service information receiver home network judging module 520 is placed in the CSCF entity; the message service information interworking interface module is placed in the CSCF entity.

The message flow of the embodiment is as follows:

S1302: The message service information transmitting module 510 sends out-session message service information, such as a message, to the CSCF, and the out-session message service information carries message service information content of the multimedia format. The destination identifier of the message is the receiver identifier, for example, the Request-URI of the message is 12345678@cs.domain.cn.

S1304: The message service information receiver home network judging module 520 in the CSCF judges that the receiver network of the message service information is a traditional circuit switched network according to the message service information receiver identifier. The message service information transfer method judging module 532 judges that the message service information is transferred outside the session. Optionally, the sequence of the two judgments may be inversed. The message service information content media format judging module 562 judges that the message service information content is of the multimedia type. The out-session multimedia message service information interworking interface module 564 in the CSCF transfers the message service information to the home multimedia message service network of the message service information receiver over HTTP.

### Embodiment 112

Figure 14 shows a message flow according to embodiment 112 of the invention.

The message service information receiver home network judging module 520 is placed in the CSCF entity; the message service information transfer method judging module 532 is placed in the CSCF entity; the message service information content media format judging module 562 is placed in the CSCF entity; and the out-session text message service information interworking interface module 566 is place in the BGCF entity.

The message flow of the embodiment is as follows:

S1402: The message service information transmitting module 510 sends out-session message service information, such as a message, to the CSCF, and the out-session message service information carries message service information content of the text format. The destination identifier of the message is the receiver identifier, for example, the Request-urn of the message is 12345678@cs.domain.cn.

S1404: The message service information receiver home network judging module 520 in the CSCF judges that the receiver network of the message service information is a traditional circuit switched network according to the message service information receiver identifier. The message service information transfer method judging module 532 judges that the message service information is transferred outside the session. Optionally, the sequence of the two judgments may be inversed. The message service information content media format judging module 562 judges that the message service information content is of the text type. The CSCF determines that the out-session text message service information interworking interface module 566 is in the BGCF entity according to the local configuration. The message service application server transfers the message service information to the BGCF, the message carrying routing information, for example, an additional message-route: text message service_interface@bgcf.home.cn.

S1406: The BGCF determines that the message service information needs to be transferred to the home text message service network of the message service information receiver via the local out-session text message service information interworking interface module 566. The BGCF transfers the message service information to the home text message service network of the message service information receiver over MAP.

Based on this embodiment, the procedures when the modules are distributed as follows can be deduced:

1) The message service information receiver home network judging module 520 and the message service information transfer method judging module 532, the message service information content media format judging module 562, the out-session multimedia message service information interworking interface module 564, and the out-session text message service information interworking interface module 566 may be placed in network entities as follows according to the order of the message flow: the network entity in the first location is the CSCF and the network entity in the second location is the BGCF.

2) The distribution rule is as follows:

When the message service information receiver home network judging module 520 is placed in the CSCF entity and the out-session multimedia message service information interworking interface module 564 or the out-session text message service information interworking interface module 566 is placed in the BGCF entity, the message service information transfer method judging module 532 and the message service information content media format judging module 562 may be placed in any of the network entities described in 1) and the home network entity of the message service information transfer method judging module 532 is in a position ahead of or in a same position as the home network entity of the message service information content media format judging module 562.

### Embodiment 113

Figure 15 shows a message flow according to embodiment 113 of the invention.

The message service information receiver home network judging module 520 is placed in the CSCF entity; the message service information transfer method judging module 532 is placed in the CSCF entity; the message service information content media format judging module 562 is placed in the CSCF entity; and the out-session multimedia message service information interworking interface module 564 is placed in the MGCF entity.

The message flow of the embodiment is as follows:

S1502: The message service information transmitting module 510 sends out-session message service information, such as a message, to the CSCF, and the out-session message service information carries message service information content of the multimedia format. The destination identifier of the message is the receiver identifier, for example, the Request-URI of the message is 12345678@cs.domain.cn.

S1504: The message service information receiver home network judging module 520 in the CSCF judges that the receiver network of the message service information is a traditional circuit switched network according to the message service information receiver identifier. The message service information transfer method judging module 532 judges that the message service information is transferred outside the session. Optionally, the sequence of the two judgments may be inversed. The message service information content media format judging module 562 judges that the message service information content is of the multimedia type. The CSCF determines that the out-session multimedia message service information interworking interface module 564 is in the MGCF entity according to the local configuration. The message service application server transfers the message service information to the MGCF, or transfers the message service information to the MGCF via the BGCF, the message carrying routing information, for example, an additional message-route: mms_interface@mgcf.home.cn.

S1506: The MGCF determines that the message service information needs to be transferred to the home multimedia message service network of the message service information receiver via the local out-session text message service information interworking interface module 566. The MGCF transfers the message service information to the home multimedia message service network of the message service information receiver over HTTP.

Based on this embodiment, the procedures when the modules are distributed as follows can be deduced:

1) The message service information receiver home network judging module 520 and the message service information transfer method judging module 532, the message service information content media format judging module 562, the out-session multimedia message service information interworking interface module 564, and the out-session text message service information interworking interface module 566 may be placed in network entities as follows according to the order of the message flow: the network entity in the first position is the CSCF, the network entity in the second position is the BGCF, and the third position is the MGCF; or the network entity in the first position is the CSCF, and the network entity in the second position is the MGCF.

2) The distribution rule is as follows:

When the message service information receiver home network judging module 520 is placed in the CSCF entity and the out-session multimedia message service information interworking interface module 564 or the out-session text message service information interworking interface module 566 is placed in the MGCF entity, the message service information transfer method judging module 532 and the message service information content media format judging module 562 may be placed in any of the network entities described in 1) and the home network entity of the message service information transfer method judging module 532 is in a position ahead of or in a same position as the home network entity of the message service information content media format judging module 562.

### And/or embodiment 201

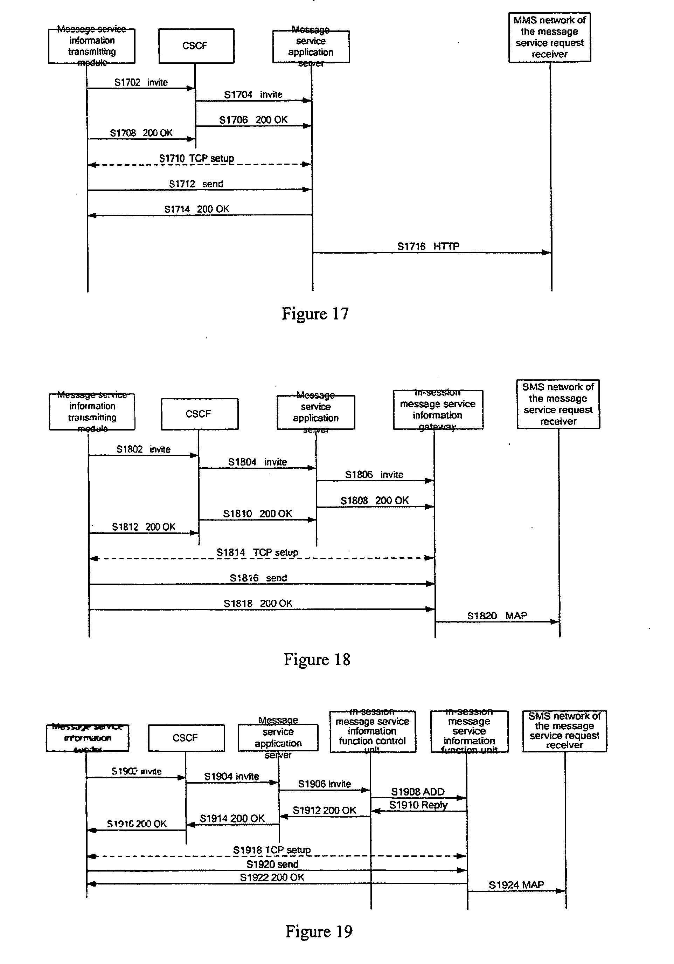

Figure 17 shows a message flow according to embodiment 201 of the invention.

The message service information receiver home network judging module 520 is placed in the message service application server; the message service information transfer method judging module 532 is placed in the message service application server; the in-session message service information function control module 552 is placed in the message service application server; the in-session message service information function module 554 is placed in the message service application server; and the in-session message service information transmitting interface module is placed in the message service application server.

The message flow of the embodiment is as follows:

S1702: The message service information transmitting module 510 sends a session request to the CSCF, the message carrying multimedia message service information with the destination identifier set to the identifier of the message service information receiver, for example:
INVITE sip:12345678@cs.domain.cn SIP/2.0
......
Content-Type: application/sdp
Content-Length: (...) v=0
o=- 2987933615 2987933615 IN IP6 5555::aaa:bbb:ccc:ddd
s=-
c=IN IP6 5555::aaa:bbb:ccc:ddd
t=0 0
m=message 3402 TCP/MSRP*
a=accept-types:message/cpim image/jpeg
a=ath:msrp://[5555::aaa:bbb:ccc:ddd]:3402/s111271;tcp
a=max-size:131072

S1704: The CSCF transfers the session request to the message service application server according to the message triggering principle.

S1706: The message service information receiver home network judging module 520 in the message service application server judges that the home network of the message service information receiver is a traditional circuit switched network according to the message service information receiver identifier. The message service information transfer method judging module 532 judges that the message service information is carried via a session request message. The in-session message service information function control module 552 assigns an in-session message service information function module 554. The in-session message service information function control module 552 in the message service application server returns a response of successful session setup to set up a session between the in-session message service information function module 554 and the message service information transmitting module 510. The response message carries message service response information, for example:
SIP/2.0 200 OK
......
Content-Type: application/sdp
Content-Length: (...)

v=0
o=- 2987933615 2987933617 IN IP6 5555:: eee:fff aaa:bbb
s=-
c=IN IP6 5555::eee:fffaaa:bbb
t=00
m=message 3402 TCP/MSRP *
a=accept-types: image/jpeg message/cpim
a=path:msrp://[5555::eee:fff:aaa:bbb]:3402/s234167;tcp
a=max-size:65536

S1708: The CSCF forwards the response to the message service information transmitting module 510.

S 1710: The message service information transmitting 510 sets up a Transport Control Protocol (TCP) connection with the in-session message service information function module 554 according to the address information of the in-session message service information function module 554 carried in the response message.

S1712: The message service information transmitting module 510 uses the send command in the Message Session Relay Protocol (MSRP) over the TCP connection which is set up in Step S1710 to send message service information content to the in-session message service information function module 554.

S1714: The in-session message service information function module 554 sends a response of successful reception to the message service information transmitting module 510.

S1716: The in-session message service information transmitting interface module delivers the message service information to the home multimedia message service network of the message service information receiver over HTTP.

### Embodiment 202

Figure 18 shows a message flow according to embodiment 202 of the invention.

The message service information receiver home network judging module 520 is placed in the message service application server; the message service information transfer method judging module 532 is placed in the message service application server; and the in-session message service information function control module 552 and the in-session message service information function module 554, and the in-session message service information transmitting interface module are in another network entity, which is identified as an in-session message service information gateway in the figure.

The message flow of the embodiment is as follows:

S 1802: The message service information transmitting module 510 sends a session request to the CSCF, the message carrying text message service information with the destination identifier set to the identifier of the message service information receiver, for example:
INVITE sip: 12345678@cs.domain.cn SIP/2.0
......
Content-Type: application/sdp
Content-Length: (...)

v=0
o=- 2987933615 2987933615 IN IP6 5555::aaa:bbb:ccc:ddd
s=-
c=IN IP6 5555::aaa:bbb:ccc:ddd
t=0 0
m=message 3402 TCP/MSRP*
a=accept-types:message/cpim text/plain text/html
a=path:msrp://[5555::aaa:bbb:ccc:ddd]:3402/s111271;tcp
a=max-size:131072

S1804: The CSCF transfers the session request to the message service application server according to the message triggering principle.

S1806: The message service information receiver home network judging module 520 in the message service application server judges that the home network of the message service information receiver is a traditional circuit switched network according to the message service information receiver identifier. The message service information transfer method judging module judges that the message service information is carried via a session request. The message service application server determines that the in-session message service information function control module 552 is in the in-session message service information gateway according to local data configuration. The message service application server sends the session request to the in-session message service information gateway.

S1808: The in-session message service information function control module 552 in the in-session message service information gateway assigns an in-session message service information function module 554. Upon successful assignment, the in-session message service information function control module 552 in the in-session message service information gateway returns a response of successful session setup to set up a session between the in-session message service information function module 554 and the message service information transmitting module 510. The response message carries message service response information, for example:
SIP/2.0 200 OK
Content-Type: application/sdp
Content-Length: (...)

v=0
o=- 2987933615 2987933617 IN IP6 5555:: eee:fff:aaa:bbb
s=-
c=IN IP6 SSSS::eee:fff-.aaa:bbb
t=0 0
m=message 3402 TCP/MSRP *
a=accept-typesaext/plain text/html message/cpim
a=path:msrp://[5555::eee:fff:aaa:bbb]:3402/s234167;tcp
a=max-size:65536

S1810-S1812: The response is forwarded to the message service information transmitting module 510.

S1814-S1818 : Similar to S1710-S1714 in embodiment 201.

S 1820: The in-session message service information transmitting interface module delivers the message service information to the home text message service network of the message service information receiver over MAP.

The procedures in the in-session message service information function control module 552, the in-session message service information function module 554, and the in-session message service information transmitting interface module in this embodiment and the procedures in other modules in other embodiments can be combined to deduce the handling procedures and methods in combined situations, without further examples herein.

### Embodiment 203

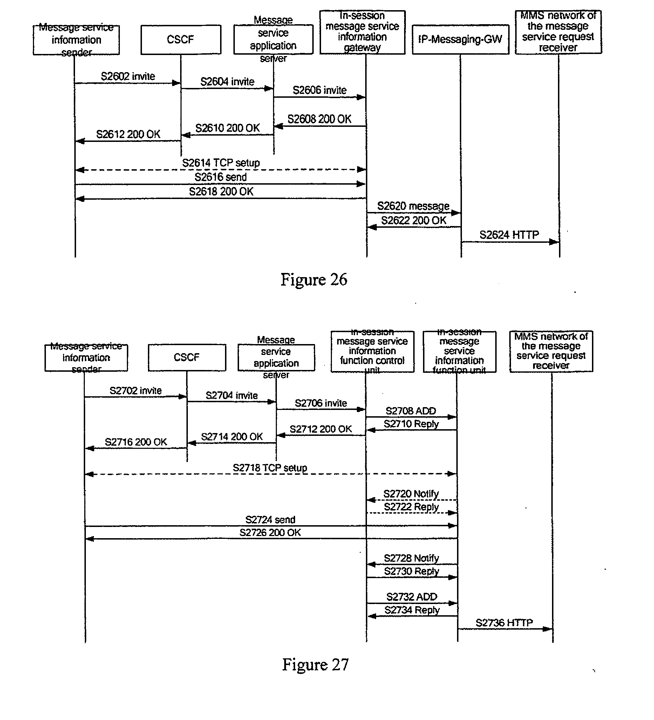

Figure 26 shows a message flow according to embodiment 203 of the invention.

The message service information receiver home network judging module 520 is placed in the message service application server; the message service information transfer method judging module 532 is placed in the message service application server; the in-session message service information function control module 552 and the in-session message service information function module 554, are placed in another network entity, which is identified as an in-session message service information gateway in the figure; and the in-session message service information transmitting interface module is in another network entity, such as the IP-Messagiung-GW.

The message flow of the embodiment is as follows:

S2602-S2618: Similar to S1802-S1818 in embodiment 202. The message service information is of the multimedia type.

S2620: The in-session message service information gateway sends the message service information to the IP-Messaging-GW.

S2622: The IP-Messaging-GW sends a response of success to the in-session message service information gateway.

S908: The IP-Messaging-GW transfers the message service information to the home multimedia message service network of the message service information receiver over HTTP

The procedures in the in-session message service information function control module 552, the in-session message service information function module 554, and the in-session message service information transmitting interface module in this embodiment and the procedures in other modules in other embodiments can be combined to deduce the handling procedures and methods in combined situations, without further examples herein.

### Embodiment 204

Figure 27 shows a message flow according to embodiment 204 of the invention.

The message service information receiver home network judging module 520 is placed in the message service application server; the message service information transfer method judging module 532 is placed in the message service application server; the in-session message service information function control module 552 is placed in another network entity, such as an in-session message service information function control unit; and the in-session message service information function module 554 and the in-session message service information transmitting interface module are in another network entity, such as an in-session message service information function unit.

The embodiment extends the H.248 short message data package so that it is able to carry short message information,

Definition of Short Message Data Package:
PackageID: normal int (such as 0xCE)

### Properties:

Property Name: Short Message Destination URI
PropertyID: SM Destination URI (0x0001)
Description: Defines the URI address of the message service information receiver.
Type: string
Defined in: Local Control descriptor
Characteristics: Read/Write
Property Name: Short Message Destination Address
PropertyID: SM Destination Address (0x0001)
Description: Defines the integer address of the message service information receiver.
Type: Integer
Defined in: Local Control descriptor
Characteristics: Read/Write
Property Name: Short Message Protocol Type
PropertyID: SM Protocol Type (0x0002)
Description: Defines the message service information transport protocol of the message service information receiver, such as HTTP, SMTP and MAP.
Type: string
Defined in: Local Control descriptor
Characteristics: Read/Write

### Events:

Event Name: Connection Finished
EventID: cf (0x0003)
Description: The in-session message service information transfer channel is set up successfully.
Event Name: Short Message Arrived
EventID: ad (0x0004)
Description: In-session message service information arrived.
Statistics: none
Signals: none
Procedures: MGC may carry a short message data package in any command.

The message flow of the embodiment is as follows:

S2702: Similar to S 1702 in embodiment 201.

S2704: The CSCF transfers the session request to the message service application server according to the message triggering principle.

S2706: The message service information receiver home network judging module 520 in the message service application server judges that the home network of the message service information receiver is a traditional circuit switched network according to the message service information receiver identifier. The message service information transfer method judging module 532 judges that the message service information is carried via a session request. Optionally, the sequence of the two judgments may be inversed. The message service application server determines that the in-session message service information function control module 552 is in the in-session message service information function control unit according to local data configuration. The message service application server sends the session request to the in-session message service information function control unit.

S2708: The in-session message service information function control module 552 in the in-session message service information function control unit sends an ADD message to the in-session message service information function module 554. The message carries the in-session message service information transport address and/or the transport protocol, and/or the format type of the message service information, and/or the number of bytes of the message service information, of the message service information sender, for example:

```
      MEGACO/3 [123.123.123.4]:55555
      Transaction = 50003 {
          Context = $ {
             Add=A5555,
             Add = $ {Media {
                   Stream = 1 {
                        LocalControl {
                            Mode = SendRecv,
                         },
                       Local {
      v=0
      s=-
      c=IN IP4 $
     t=0 0
      m=message $ TCP/MSRP *
      a=accept-types: image/jpeg
      a=max-size:65536
      }
                        Remote {
      v=0
      o=- 2987933615 2987933615 IN IP4 123.123.123.1
      s=-
     c=IN IP4 123.123.123.1
     t=0 0
    m=message 3402 TCP/MSRP*
    a=accept-types: image/jpeg
    a=path:mszp://[123.123.123.1]:3402/s111271;tcp
    a=max-size:131072
                       }
                   }
                }
    Events = 0003 {cf}
    Events = 0004 {ad}
           }
        }
     }
```

S2710: The in-session message service information function unit sends a response of success to the in-session message service information function control unit. The response message carries the in-session message service information transport address and/or transport protocol, and/or the format type of the message service information, and/or the number of bytes of the message service information, of the in-session message service information function unit, for example:

```
     MEGACO/3 [125.125.125.111]:55555
    Reply = 50003 {
        Context = 5000 {
        Add = A5555,
           Add = A5556{
               Media {
                   Stream = 1 {
                       Local {
     v=0
     o=- 2987933615 2987933617 IN IP4 123.123.123.111
     s=-
     c==IN IP4 125.125.125.111
     t=0 0
     m=message 3402 TCP/MSRP *
     a=accept-typcs: image/jpeg
     a=path:msrp://[125.125.125.111]:3402/s234167;tcp
     a=max-size:65536
     }
                   }
                }
             }
         }
     }
```

S2712-S2716:The response is forwarded to the message service information sender.

S2718: Similar to S 1710 in embodiment 201.

S2720: The in-session message service information function unit sends a notification to the in-session message service information function control unit, notifying the in-session message service information function control unit that the in-session message service information transport channel is set up successfully. The message carries an event named "Connection Finished" defined in the extended H.248 short message data package.

S2722: The in-session message service information function control unit sends a response to the in-session message service information function unit. S2720 to S2722 are optional steps.

S2724-S2726: Similar to S1712-S1714 in embodiment 201.

S2728: The in-session message service information function unit sends a notification to the in-session message service information function control unit, notifying the in-session message service information function control unit that in-session message service information has arrived. The message carries an event named "Short Message Arrived" defined in the extended H.248 short message data package.

S2730: The in-session message service information function control unit sends a response message to the in-session message service information function unit.

S2732: The in-session message service information function control module 552 in the in-session message service information function control unit sends an ADD message to the in-session message service information function module 554, requesting the in-session message service information function module 554 to deliver the message service information to the home multimedia message service network of the message service information receiver. The message carries the home multimedia message service network address information of the message information receiver defined in the extended H.248 short message data package, or carries Session Description Protocol (SDP) information.

S2734: The in-session message service information function unit sends a response message to the in-session message service information function control unit.

S2736: Similar to S1716 in embodiment 201.

The procedures in the in-session message service information function control module 552, the in-session message service information function module 554, and the in-session message service information transmitting interface module in this embodiment and the procedures in other modules in other embodiments can be combined to deduce the handling procedures and methods in combined situations, without further examples herein.

### Embodiment 205

Figure 19 shows a message flow according to embodiment 205 of the invention.

The message service information receiver home network judging module 520 is placed in the message service application server; the message service information transfer method judging module 532 is placed in the message service application server; the in-session message service information function control module 552 is placed in another network entity, such as an in-session message service information function control unit; and the in-session message service information function module 554 and the in-session message service information transmitting interface module are in another network entity, such as an in-session message service information function unit.

The message flow of the embodiment is as follows:

S1902: Similar to S1802 in embodiment 202.

S1904: The CSCF transfers the session request to the message service application server according to the message triggering principle.

S1906: The message service information receiver home network judging module 520 in the message service application server judges that the home network of the message service information receiver is a traditional circuit switched network according to the message service information receiver identifier. The message service information transfer method judging module 532 judges that the message service information is carried via a session request. The message service application server determines that the in-session message service information function control module 552 is in another network entity according to local data configuration. The message service application server sends the session request to the in-session message service information function control module 552.

S1908: The in-session message service information function control module 552 selects an in-session message service information function module 554 and sends the message service information to the in-session message service information function module 554.

S1910: The in-session message service information function module 554 sends a response of success to the in-session message service information function control module 552.

S1912-S1916: The response is forwarded to the message service information transmitting module 510.

S1918-S1920: Similar to S1810-S1816 in embodiment 202.

The procedures in the in-session message service information function control module 552, the in-session message service information function module 554, and the in-session message service information transmitting interface module in this embodiment and the procedures in other modules in other embodiments can be combined to deduce the handling procedures and methods in combined situations, without further examples herein.

### Embodiment 206

Figure 16 shows a message flow according to embodiment 206 of the invention.

The message service information receiver home network judging module 520 is placed in the message service application server; the message service information transfer method judging module 532 is placed in the message service application server; the in-session message service information function control module 552 is placed in another network entity, such as an in-session message service information function control unit; and the in-session message service information function module 554 and the in-session message service information transmitting interface module are in another network entity, such as an in-session message service information function unit.

The in-session message service information function control module 552 and the in-session message service information function module 554 do not exchange messages. The in-session message service information function control unit sends a response to the message service information request to the message service information sender in step S 1608. The response message carries information of the in-session message service information function unit about the setup of a message service information session. The information is pre-agreed between the in-session message service information function control module 552 and the in-session message service information function module 554.

The procedures in the in-session message service information function control module 552, the in-session message service information function module 554, and the in-session message service information transmitting interface module in this embodiment and the procedures in other modules in other embodiments can be combined to deduce the handling procedures and methods in combined situations, without further examples herein.

### Embodiment 207

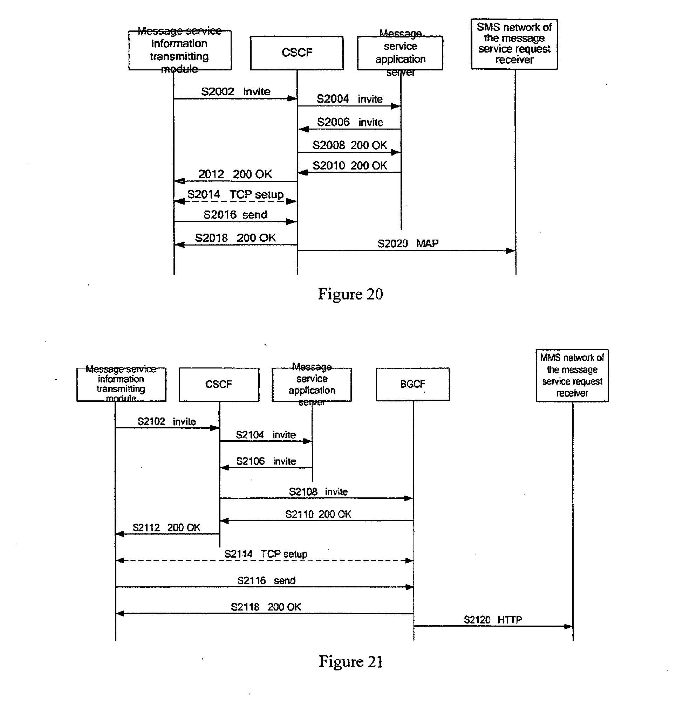

Figure 20 shows a message flow according to embodiment 207 of the invention.

The message service information receiver home network judging module 520 is placed in the message service application server entity; the message service information transfer method judging module 532 is placed in the message service application server entity; the in-session message service information function control module 552 is placed in the CSCF entity; the in-session message service information function module 554 is placed in the CSCF entity; and the in-session message service information transmitting interface module is placed in the CSCF entity.

The message flow of the embodiment is as follows:

S2002: Similar to S 1802 in embodiment 202.

S2004: The CSCF transfers the session request to the message service application server according to the message triggering principle.

S2006: The message service information receiver home network judging module 520 in the message service application server judges that the home network of the message service information receiver is a traditional circuit switched network according to the message service information receiver identifier. The message service information transfer method judging module 532 judges that the message service information is carried via a session request. Optionally, the sequence of the two judgments may be inversed. The message service application server determines that the in-session message service information function control module 552 is in the CSCF according to local data configuration. The message service application server sends the session request to the CSCF.

S2008: The in-session message service information function control module 552 in the CSCF assigns an in-session message service information function module 554 and returns a response of successful session setup to set up a session between the in-session message service information function module 554 and the message service information transmitting module 510. The response message carries message service response information.

S2010-S2012: The message service application server forwards the response message to the CSCF; the CSCF forwards the response to the message service information transmitting module 510.

S2014-S2020: Similar to S1814-S1820 in embodiment 202.

Based on this embodiment, the procedures when the modules are distributed as follows can be deduced:

1) The message service information receiver home network judging module 520 and the message service information transfer method judging module 532, the message service information content media format judging module 552, the in-session message service information function module 554, and the in-session message service information function control module 556 may be placed in network entities as follows according to the order of the message flow: the network entity in the first location is the message service application server and the network entity in the second location is the CSCF.

2) The distribution rule is as follows:

When the message service information receiver home network judging module 520 is in the message service application server entity and the in-session message service information transmitting module is in the CSCF entity, the message service information transfer method judging module 532, the in-session message service information function control module 552, and the in-session message service information function module 554 may be in any of the network entities described in 1) and the network entity of the message service information transfer method judging module 532 is in a position ahead of or in a same position as the network entity of the in-session message service information function module 554; and

When the message service information receiver home network judging module 520 is in the CSCF entity and the in-session message service transmitting module is in the CSCF entity, and the message service information transfer method judging module 532 is in the message service application server entity, the in-session message service information function control module 552 and the in-session message service information function module 554 may be in the CSCF entity or any network entity behind the CSCF entity described in 1) and the network entity of the in-session message service information function control module 552 is in a position ahead of or in a same position as the network entity of the in-session message service information function module 554.

### Embodiment 208

Figure 21 shows a message flow according to embodiment 208 of the invention.

The message service information receiver home network judging module 520 is placed in the message service application server entity; the message service information transfer method judging module 532 is placed in the message service application server entity; the in-session message service information function control module 552 is placed in the BGCF entity; the in-session message service information function module 554 is placed in the BGCF entity; and the in-session message service information transmitting interface module is placed in the BGCF entity.

The message flow of the embodiment is as follows:

S2102: Similar to S1702 in embodiment 201.

S2104: Similar to S2004 in embodiment 208.

S2106: The message service information receiver home network judging module 520 in the message service application server judges that the home network of the message service information receiver is a traditional circuit switched network according to the message service information receiver identifier. The message service information transfer method judging module 532 judges that the message service information is carried via a session request. Optionally, the sequence of the two judgments may be inversed. The message service application server determines that the in-session message service information function control module 552 is in the BGCF according to local data configuration. The message service application server sends the session request to the BGCF.

S2108: The CSCF sends the message service information to the BGCF.

S2110: The in-session message service information function control module 552 in the BGCF assigns an in-session message service information function module 554 and returns a response of successful session setup to set up a session between the in-session message service information function module 554 and the message service information transmitting module 510. The response message carries message service response information.

S2112: The response is forwarded to the message service information transmitting module 510.

S2114-S2120: Similar to S1710-S1716 in embodiment 201.

Based on this embodiment, the procedures when the modules are distributed as follows can be deduced:

1) The message service information receiver home network judging module 520 and the message service information transfer method judging module 532, the message service information content media format judging module 552, the in-session message service information function module 554, and the in-session message service information function control module 556 may be placed in network entities as follows according to the order of the message flow: the network entity in the first position is the message service application server, the network entity in the second position is the CSCF, and the network entity in the third position is the BGCF.

2) The distribution rule is as follows:

When the message service information receiver home network judging module 520 is in the message service application server entity and the in-session message service information transmitting module is in the BGCF entity, the message service information transfer method judging module 532, the in-session message service information function control module 552, and the in-session message service information function module 554 may be in any of the network entities described in 1) and the network entity of the message service information transfer method judging module 532 is in a position ahead of or in a same position as the network entity of the in-session message service information function module 554, and the in-session message service information function control module 552 is in a position ahead of or in a same position as the network entity of the in-session message service information function module 554; arid

When the message service information receiver home network judging module 520 is in the CSCF entity and the in-session message service transmitting module is in the MGCF entity, and the message service information transfer method judging module 532 is in the message service application server entity, the in-session message service information function control module 552 and the in-session message service information function module 554 may be in the CSCF entity or any network entity behind the CSCF entity described in 1) and the network entity of the in-session message service information function control module 552 is in a position ahead of or in a same position as the network entity of the in-session message service information function module 554.

### Embodiment 209

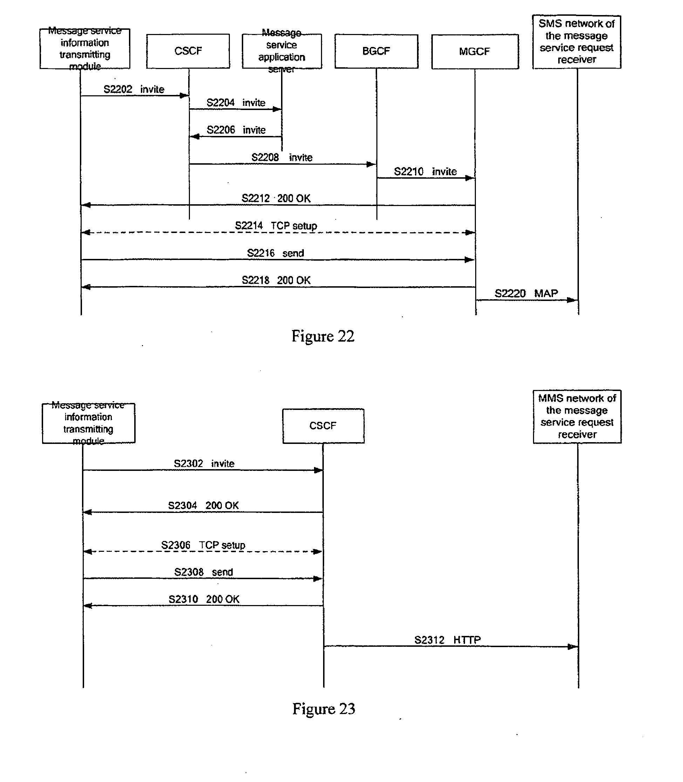

Figure 22 shows a message flow according to embodiment 209 of the invention.

The message service information receiver home network judging module 520 is placed in the message service application server entity; the message service information transfer method judging module 532 is placed in the message service application server entity; the in-session message service information function control module 552 is placed in the MGCF entity: the in-session message service information function module 554 is placed in the MGCF entity; and the in-session message service information transmitting interface module is placed in the MGCF entity.

The message flow of the embodiment is as follows:

S2202: Similar to S 1802 in embodiment 202.

S2204: Similar to S2004 in embodiment 207.

S2206: The message service application server determines that the home network of the message service information receiver is a traditional circuit switched network. The message service information transfer method judging module 532 judges that the message service information is carried via a session request. Or optionally, the sequence of the two judgments may be inversed. The message service application server determines that the in-session message service information function control module 552 is in the MGCF according to local data configuration and sends the message service information to the MGCF.

S2208-S2210: The CSCF sends the message service information to the MGCF.

S2212: The in-session message service information function control module 552 in the MGCF assigns an in-session message service information function module 554 and returns a response of successful session setup to set up a session between the in-session message service information function module 554 and the message service information transmitting module 510. The response message carries message service response information.

S2214-S2220: Similar to S1814-S1820 in embodiment 202.

Based on this embodiment, the procedures in the following scenarios can be deduced:

Based on this embodiment, the procedures when the modules are distributed as follows can be deduced:

1) The message service information receiver home network judging module 520 and the message service information transfer method judging module 532, the in-session message service information function control module 552, the in-session message service information function module 554, and the in-session message service information transmitting interface module may be placed in network entities as follows according to the order of the message flow: the network entity in the first position is the message service application server, the network entity in the second position is the CSCF, and the third position is the BGCF, and the network entity in the fourth position is the MGCF; or the network entity in the first position is the message service application server, the network entity in the second position is the CSCF, and the network entity in the third position is the MGCF.

2) The distribution rule is as follows:

When the message service information receiver home network judging module 520 is in the message service application server entity and the in-session message service information transmitting module is in the MGCF entity, the message service information transfer method judging module 532, the in-session message service information function control module 552, and the in-session message service information function module 554 may be in any of the network entities described in 1) and the network entity of the message service information transfer method judging module 532 is in a position ahead of or in a same position as the network entity of the in-session message service information function module 554; and

When the message service information receiver home network judging module 520 is in the CSCF entity and the in-session message service transmitting module is in the MGCF entity, and the message service information transfer method judging module 532 is in the message service application server entity, the in-session message service information function control module 552 and the in-session message service information function module 554 may be in the CSCF entity or any network entity behind the CSCF entity described in 1) and the network entity of the in-session message service information function control module 552 is in a position ahead of and in a same position as the network entity of the in-session message service information function module 554.

### Embodiment 211

Figure 23 shows a message flow according to embodiment 211 of the invention.

The message service information receiver home network judging module 520 is placed in the CSCF entity; the message service information transfer method judging module 532 is placed in the CSCF entity; the in-session message service information function control module 552 is placed in the CSCF entity; and the in-session message service information function module 554 is place in the CSCF entity.

The message flow of the embodiment is as follows:

S2302: Similar to S1702 in embodiment 201.

S2304: The message service information receiver home network judging module 520 in the CSCF judges that the home network of the message service information receiver is a traditional circuit switched network according to the message service information receiver identifier. The message service information transfer method judging module 532 judges that the message service information is carried via a session request message. Or, optionally, the sequence of the two judgments may be inversed. The in-session message service information function control module 552 assigns an in-session message service information function module 554. The in-session message service information function control module 552 in the CSCF returns a response of successful session setup to set up a session between the in-session message service information function module 554 and the message service information transmitting module 510. The response message carries message service response information.

S2306-S2312: Similar to S1710-S1716 in embodiment 201.

### Embodiment 212

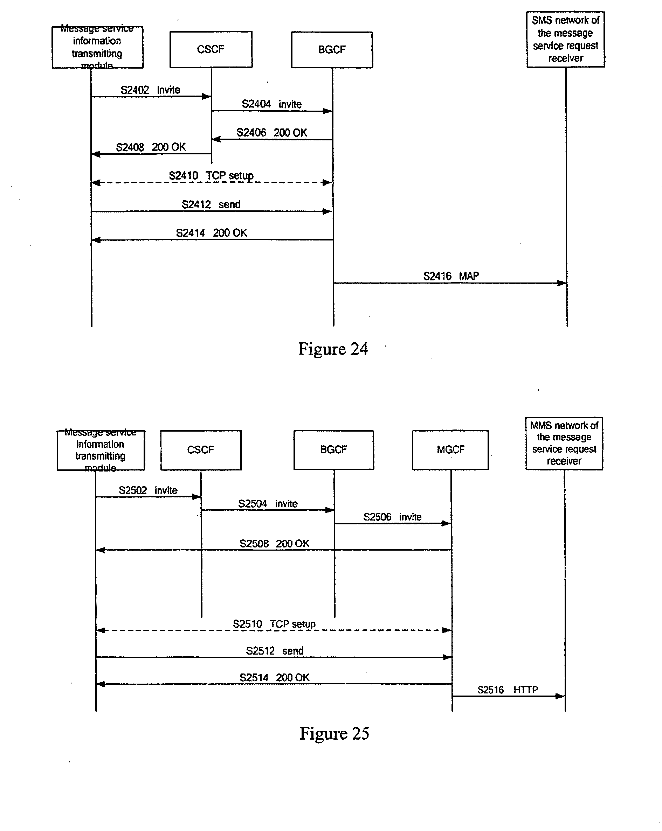

Figure 24 shows a message flow according to embodiment 212 of the invention.

The message service information receiver home network judging module 520 is placed in the CSCF entity; the message service information transfer method judging module 532 is placed in the CSCF entity; the in-session message service information function control module 552 is placed in the BGCF entity; and the in-session message service information function module 554 is place in the BGCF entity.

The message flow of the embodiment is as follows:

S2402: Similar to S1802 in embodiment 202.

S2404: The message service information receiver home network judging module 520 in the CSCF judges that the home network of the message service information receiver is a traditional circuit switched network according to the message service information receiver identifier. The message service information transfer method judging module 532 judges that the message service information is carried via a session request. Optionally, the sequence of the two judgments may be inversed. The message service application server determines that the in-session message service information function control module 552 is in the BGCF according to local data configuration. The CSCF sends the session request to the BGCF.

S2406: The in-session message service information function control module 552 in the BGCF assigns an in-session message service information function module 554 and returns a response of successful session setup to set up a session between the in-session message service information function module 554 and the message service information transmitting module 510. The response message carries message service response information.

S2408: The CSCF forwards the response to the message service information transmitting module 510.

S2410-S2416: Similar to S1814-S1820 in embodiment 202.

Based on this embodiment, the procedures when the modules are distributed as follows can be deduced:

1) The message service information receiver home network judging module 520 and the message service information transfer method judging module 532, the message service information content media format judging module 552, the in-session message service information function module 554, and the in-session message service information function control module 556 may be placed in network entities as follows according to the order of the message flow: the network entity in the first position is the CSCF and the network entity in the second position is the BGCF.

2) The distribution rule is as follows:

When the message service information receiver home network judging module 520 is in the CSCF entity and the message service information transfer method judging module 532 is in the CSCF entity, and the in-session message service information transmitting interface module is in the BGCF, the in-session message service information function control module 552 and the in-session message service information function module 554 may be in the CSCF entity or any network entity behind the CSCF entity described in 1) and the network entity of the in-session message service information function control module 552 is in a position ahead of and in a same position as the network entity of the in-session message service information function module 554.

### Embodiment 213

Figure 25 shows a message flow according to embodiment 213 of the invention.

The message service information receiver home network judging module 520 is placed in the CSCF entity; the message service information transfer method judging module 532 is placed in the CSCF entity; the in-session message service information function control module 552 is placed in the MGCF entity; and the in-session message service information function module 554 is place in the MGCF entity.

The message flow of the embodiment is as follows:

S2502: Similar to S 1702 in embodiment 201.

S2504: The message service information receiver home network judging module 520 in the CSCF judges that the home network of the message service information receiver is a traditional circuit switched network according to the message service information receiver identifier. The message service information transfer method judging module 532 judges that the message service information is carried via a session request. Optionally, the sequence of the two judgments may be inversed. The message service application server determines that the in-session message service information function control module 552 is in the MGCF according to local data configuration. The CSCF sends the session request to the MGCF.

S2506: The border session control function sends the message service information to the MGCF.

S2508: The in-session message service information function control module 552 in the MGCF assigns an in-session message service information function module 554 and returns a response of successful session setup to set up a session between the in-session message service information function module 554 and the message service information transmitting module 510. The response message carries message service response information.

S2510: The response is forwarded to the message service information transmitting module 510.

S2512-S2516: Similar to S1712-S1716 in embodiment 201.

Based on this embodiment, the procedures when the modules are distributed as follows can be deduced:

1) The message service information receiver home network judging module 520 and the message service information transfer method judging module 532, the in-session message service information function control module 552, the in-session message service information function module 554, and the in-session message service information transmitting interface module may be placed in network entities as follows according to the order of the message flow: the network entity in the first position is the CSCF, the network entity in the second position is the BGCF, and the third position is the MGCF; or network entity in the first position is the CSCF, and the network entity in the second position is the MGCF.

2) The distribution rule is as follows:

When the message service information receiver home network judging module 520 is in the CSCF entity and the message service information transfer method judging module 532 is in the CSCF entity, and the in-session message service information transmitting interface module is in the MGCF, the in-session message service information function control module 552 and the in-session message service information function module 554 may be in the CSCF entity or any network entity behind the CSCF entity described in 1) and the network entity of the in-session message service information function control module 552 is in a position ahead of or in a same position as the network entity of the in-session message service information function module 554.

With reference to embodiment 102, the procedure in another entity accessed by the out-session multimedia message service information interworking interface module 564 or the out-session text message service information interworking interface module 566 via the network entity in the last position can be deduced for embodiments 103-113.

With reference to embodiments 202-206, the procedures in other same or different entities respectively accessed by the in-session message service information function control module 552, the in-session message service information function module 554, and the in-session message service information transmitting interface module via the network entity in the last position can be deduced for embodiments 207-213.

Based on all the embodiments, the processing methods in the following scenarios can be deduced:

1) Multimedia message service information is sent to the home multimedia message service network of the message service information receiver;

2) Multimedia message service information is sent to the home text message service network of the message service information receiver;

3) Text message service information is sent to the home text message service network of the message service information receiver; and

4) Text message service information is sent to the home multimedia message service network of the message service information receiver.

When there is only in-session or out-session message service information in the entire network, the operations in the message service information transfer method judging module may be omitted. The message service information receiver home network judging module 520 directly delivers the message service information to the in-session message service information interworking interface module 550 or the out-session message service information interworking interface module 560.

The technical solution provided by embodiments of the invention judges that the home network of the message service information receiver is a traditional circuit switched network according to the message service information receiver identifier, judges that the message service information is carried via a session request message, and then transfers the message service information to the home short message network of the message service information receiver. With the technical solution, the network is able to route a message to the IP-Messaging-GW when a UE accesses. The technical solution also solves the interworking between non-session based message service and the multimedia message service as well as the interworking between session-based message service and the message service in a heterogeneous network such as the traditional circuited switched domain.

It should be understood that the above message service routing method is applicable to the message service interworking between the home network of the message service information transmitting module and a heterogeneous network. The heterogeneous network is a network that has an architecture different from that of the home network of the message service information transmitting module. For example, when the home network of the message service information transmitting module is an IMS network or another SIP network, a traditional circuit-switched network or a packet switched network is a heterogeneous network of the home network of the message service information transmitting module.

From the above description, it can be seen that the embodiments of the invention achieve the following technical benefits:

The technical solution provided by embodiments of the invention judges that the home network of the message service information receiver is a traditional circuit switched network according to the message service information receiver identifier, judges that the message service information is carried via a session request message, and then transfers the message service information to the home short message network of the message service information receiver. With the technical solution, the network is able to route a message to the IP-Messaging-GW when a UE accesses. The technical solution also solves the interworking between non-session based message service and the multimedia message service as well as the interworking between session-based message service and the message service in a heterogeneous network such as the traditional circuited switched domain.

Although the technical scheme of the present invention has been described through exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the claims.

## Claims

1. A method of message service routing in IP Multimedia Subsystem, IMS, network, **characterised by** comprising:
sending (S602) by a user terminal or a first message service application server of the IMS network, a request, carrying an identification of a message service information receiver and a message service information corresponding to the message service information receiver;
determining (S604) by a second message service application server of the IMS network, whether the message service information receiver is a traditional Circuit Switched, CS, domain user based on the identification of the message service information receiver, wherein the step of determining whether the message service information receiver is a traditional CS domain user further comprises: analyzing the identification of the message service information receiver by querying Domain Name Server database or Telephone Number Mapping database or checking the local configuration of the second message service application server;
determining by the second message service application server, the message service information is in-session message service information or outside-session message service information according to message service session negotiate information of the request; and
transmitting (S606), by the second message service application server, the message service information to a CS domain network which the message service information receiver belongs to according to whether the message service information is in-session message service information or outside-session message service information when the message service information receiver is a traditional CS domain user.

2. The message service routing method of claim 1, wherein the determining the message service information is in-session message service information or outside-session message service information according to message service session negotiate information of the request further comprises: determining the message service information is in-session message service information or outside-session message service information according to a style of the message service session negotiate information of the request.

3. The message service routing method of claim 1, wherein the step of transmitting (S606) the message service information to the network which the message service information receiver belongs to comprising at least one of the following:
transmitting the message service information to the message service network of the message service information receiver;
checking the content format of the message service information, and transmitting the message service information to the multimedia message service network of the message service information receiver when the format of the message service information is multimedia;
checking the content format of the message service information, and transmitting the message service information to the text message service network of the message service information receiver when the format of the message service information is multimedia;
checking the content format of the message service information, and transmitting the message service information to the text message service network of the message service information receiver when the format of the message service information is text; and
checking the content format of the message service information, and transmitting the message service information to the multimedia message service network of the message service information receiver when the format of the message service information is text.

4. The message service routing method of claims 1, wherein the transmitting (S606), the message service information to a CS domain network which the message service information receiver belongs to further comprises determining that the message service information content is of the multimedia type and transferring the message service information to the multimedia message service network which the message service information receiver belongs to over Hypertext Transfer Protocol when the message service information receiver is a traditional CS domain user and the message service information is outside-session message service information.

5. The message service routing method of claims 1, wherein the transmitting (S606), the message service information to a CS domain network which the message service information receiver belongs to further comprises returning a response of successful session setup to set up a session between the message service information sender of the IMS network and the message service information processor of the IMS network if determining the message service information is inside-session message service information.

6. A message service routing system, **characterised by** comprising:
a message service information transmitting module (510), configured to send a request, wherein the request carries a message service information associating a message service information receiver;
a message service information route selecting module (530), configured to receive the request and send the message service information carried in the request, further comprising:
a message service information receiver home network judging module (520), configured to determine that the message service information receiver belongs to a CS domain network based on analyzing a message service information receiver identifier carried in the request by querying Domain Name Server database or Telephone Number Mapping database or checking the local configuration of the second message service application server; and
a message service information transfer method judging module (532), configured to judge whether the message service information is transferred in session or outside session;
a message service information interworking interface module (540), configured to receive the message service information and send the message service information to the CS domain network which the message service information receiver belongs to according to whether the message service information is transferred in session or outside session when the message service information receiver belongs to a CS domain network;
wherein the message service information transmitting module (510) is located in a user terminal or a first message service application server of an IMS network and the message service information route selecting module (530) and the message service information interworking interface module (540) are located in a second message service application server of the IMS network.

7. The message service routing system of claim 6, wherein when the message service information receiver home network judging module (520) determines that the network which the message service information receiver belongs to is a CS network, the message service information route selecting module (530) transmits the message service information to the message service information interworking interface module (540).

## Patentansprüche

1. Verfahren zum Routen von Nachrichtendiensten in einem Netzwerk des IP Multimedia Subsystem IMS, **gekennzeichnet durch** die folgenden Schritte:
Senden (S602) einer Anforderung **durch** ein Benutzerendgerät oder einen ersten Nachrichtendienst-Anwendungsserver des IMS-Netzwerks, die eine Identifikation eines Nachrichtendienst-Informationsempfängers und dem Nachrichtendienst-Informationsempfänger entsprechende Nachrichtendienst-Informationen führt;
Bestimmen (S604) **durch** einen zweiten Nachrichtendienst-Anwendungsserver des IMS-Netzwerks, ob der Nachrichtendienst-Informationsempfänger ein traditioneller Benutzer der leitungsvermittelten bzw. CS-Domäne ist, auf der Basis der Identifikation des Nachrichtendienst-Informationsempfängers, wobei der Schritt des Bestimmens, ob der Nachrichtendienst-Informationsempfänger ein traditioneller CS-Domänen-Benutzer ist, ferner Folgendes umfasst: Analysieren der Identifikation des Nachrichtendienst-Informationsempfängers **durch** Abfragen einer Datenbank des Domain Name Server oder einer Datenbank der Telephone Number Mapping oder Prüfen der lokalen Konfiguration des zweiten Nachrichtendienst-Anwendungsservers;
Bestimmen **durch** den zweiten Nachrichtendienst-Anwendungsserver, dass die Nachrichtendienstinformationen sitzungsinterne Nachrichtendienstinformationen oder sitzungsexterne Nachrichtendienstinformationen sind, gemäß den Nachrichtendienst-Sitzungsaushandlungsinformationen der Anforderung; und
Senden (S606) der Nachrichtendienstinformationen **durch** den zweiten Nachrichtendienst-Anwendungsserver zu einem CS-Domänen-Netzwerk, zu dem der Nachrichtendienst-Informationsempfänger gehört, dementsprechend, ob die Nachrichtendienstinformationen sitzungsinterne Nachrichtendienstinformationen oder sitzungsexterne Nachrichtendienstinformationen sind, wenn der Nachrichtendienst-Informationsempfänger ein traditioneller CS-Domänen-Benutzer ist.

2. Verfahren zum Routen von Nachrichtendiensten nach Anspruch 1, wobei das Bestimmen, dass die Nachrichtendienstinformationen sitzungsinterne Nachrichtendienstinformationen oder sitzungsexterne Nachrichtendienstinformationen sind, gemäß Nachrichtendienst-Sitzungsaushandlungsinformationen der Anforderung ferner Folgendes umfasst: Bestimmen, dass die Nachrichtendienstinformationen sitzungsinterne Nachrichtendienstinformationen oder sitzungsexterne Nachrichtendienstinformationen sind, gemäß einem Stil der Nachrichtendienst-Sitzungsaushandlungsinformationen der Anforderung.

3. Verfahren zum Routen von Nachrichtendiensten nach Anspruch 1, wobei der Schritt des Sendens (S606) der Nachrichtendienstinformationen zu dem Netzwerk, zu dem der Nachrichtendienst-Informationsempfänger gehört, mindestens einen der folgenden Schritte umfasst:
Senden der Nachrichtendienstinformationen zu dem Nachrichtendienstnetzwerk des Nachrichtendienst-Informationsempfängers;
Prüfen des Inhaltsformats der Nachrichtendienstinformationen und Senden der Nachrichtendienstinformationen zu dem Multimedia-Nachrichtendienstnetzwerk des Nachrichtendienst-Informationsempfängers, wenn das Format der Nachrichtendienstinformationen Multimedia ist;
Prüfen des Inhaltsformats der Nachrichtendienstinformationen und Senden der Nachrichtendienstinformationen zu dem Text-Nachrichtendienstnetzwerk des Nachrichtendienst-Informationsempfängers, wenn das Format der Nachrichtendienstinformationen Multimedia ist;
Prüfen des Inhaltsformats der Nachrichtendienstinformationen und Senden der Nachrichtendienstinformationen zu dem Text-Nachrichtendienstnetzwerk des Nachrichtendienst-Infonnationsempfängers, wenn das Format der Nachrichtendienstinformationen Text ist; und
Prüfen des Inhaltsformats der Nachrichtendienstinformationen und Senden der Nachrichtendienstinformationen zu dem Multimedia-Nachrichtendienstnetzwerk des Nachrichtendienst-Informationsempfängers, wenn das Format der Nachrichtendienstinformationen Text ist.

4. Verfahren zum Routen von Nachrichtendiensten nach Anspruch 1, wobei das Senden (S606) der Nachrichtendienstinformationen zu einem CS-Domänen-Netzwerk, zu dem der Nachrichtendienst-Informationsempfänger gehört, ferner Folgendes umfasst:
Bestimmen, dass der Nachrichtendienst-Informationsinhalt vom Multimedia-Typ ist, und Übermitteln der Nachrichtendienstinformationen zu dem Multimedia-Nachrichtendienstnetzwerk, zu dem der Nachrichtendienst-Informationsempfänger gehört, über das Hypertext Transfer Protocol, wenn der Nachrichtendienst-Informationsempfänger ein traditioneller CS-Domänen-Benutzer ist und die Nachrichtendienstinformationen sitzungsexterne Nachrichtendienstinformationen sind.

5. Verfahren zum Routen von Nachrichtendiensten nach Anspruch 1, wobei das Senden (S606) der Nachrichtendienstinformationen zu einem CS-Domänen-Netzwerk, zu dem der Nachrichtendienst-Informationsempfänger gehört, ferner Folgendes umfasst: Zurückgeben einer Antwort eines erfolgreichen Sitzungsaufbaus zum Aufbauen einer Sitzung zwischen dem Nachrichtendienstinformationsabsender des IMS-Netzwerks und dem Nachrichtendienst-Informationsprozessor des IMS-Netzwerks, wenn bestimmt wird, dass die Nachrichtendienstinformationen sitzungsinterne Nachrichtendienstinformationen sind.

6. System zum Routen von Nachrichtendiensten, **dadurch gekennzeichnet, dass** es Folgendes umfasst:
ein Nachrichtendienst-Informationssendemodul (510), das dafür ausgelegt ist, eine Anforderung zu senden, wobei die Anforderung Nachrichtendienstinformationen führt, die einen Nachrichtendienst-Informationsempfänger assoziieren;
ein Nachrichtendienst-Informationsroutenauswahlmodul (530), das dafür ausgelegt ist, die Anforderung zu empfangen und die in der Anforderung geführten Nachrichtendienstinformationen zu senden, ferner umfassend:
ein Nachrichtendienst-Informationsempfänger-Heimatnetzwerkbeurteilungsmodul (520), das dafür ausgelegt ist, auf der Basis des Analysierens einer in der Anforderung geführten Nachrichtendienst-Informationsempfängerkennung zu bestimmen, dass der Nachrichtendienst-Informationsempfänger zu einem CS-Domänen-Netzwerk gehört, durch Abfragen einer Datenbank des Domain Name Server oder einer Datenbank der Telephone Number Mapping oder Prüfen der lokalen Konfiguration des zweiten Nachrichtendienst-Anwendungsservers; und ein Nachrichtendienst-Informationsübermittlungsverfahren-Beurteilungsmodul (532), das dafür ausgelegt ist zu beurteilen, ob die Nachrichtendienstinformationen sitzungsintern oder sitzungsextern übermittelt werden;
ein Nachrichtendienst-Informations-Interworking-Schnittstellenmodul (540), das dafür ausgelegt ist, die Nachrichtendienstinformationen zu empfangen und die Nachrichtendienstinformationen dementsprechend, ob die Nachrichtendienstinformationen sitzungsintern oder sitzungsextern übermittelt werden, zu dem CS-Domänen-Netzwerk zu senden, zu dem der Nachrichtendienst-Informationsempfänger gehört, wenn der Nachrichtendienst-Informationsempfänger zu einem CS-Domänen-Netzwerk gehört;
wobei das Nachrichtendienst-Informationssendemodul (510) in einem Benutzerendgerät oder einem ersten Nachrichtendienst-Anwendungsserver eines IMS-Netzwerks angeordnet ist und das Nachrichtendienst-Informationsroutenauswahlmodul (530) und das Nachrichtendienst-Informations-Interworking-Schnittstellenmodul (540) in einem zweiten Nachrichtendienst-Anwendungsserver des IMS-Netzwerks angeordnet sind.

7. System zum Routen von Nachrichtendiensten nach Anspruch 6, wobei, wenn das Nachrichtendienst-Informationsempfänger-Heimatnetzwerkbeurteilungsmodul (520) bestimmt, dass das Netzwerk, zu dem der Nachrichtendienst-Informationsempfänger gehört, ein CS-Netzwerk ist, das Nachrichtendienst-Informationsroutenauswahlmodul (530) die Nachrichtendienstinformationen zu dem Nachrichtendienst-Informations-Interworking-Schnittstellenmodul (540) sendet.

## Revendications

1. Procédé de routage de service de messagerie dans un réseau de type Sous-système Multimédia sur IP, ou IMS, **caractérisé en ce qu'**il consiste à :
envoyer (S602), au moyen d'un terminal utilisateur ou d'un premier serveur d'application de service de messagerie du réseau IMS, une demande acheminant une identification d'un récepteur d'informations de service de messagerie et une information de service de messagerie correspondant au récepteur d'informations de service de messagerie ;
déterminer (S604), au moyen d'un second serveur d'application de service de messagerie du réseau IMS, si le récepteur d'informations de service de messagerie est un utilisateur d'un domaine classique à Commutation de Circuit, CS, sur la base de l'identification du récepteur d'informations de service de messagerie, l'étape consistant à déterminer si le récepteur d'informations de service de messagerie est un utilisateur d'un domaine CS classique comprenant en outre le fait de : analyser l'identification du récepteur d'informations de service de messagerie en interrogeant une base de données d'un Serveur de Noms de Domaines ou une base de données d'Association de Numéros de Téléphone ou vérifier la configuration locale du second serveur d'application de service de messagerie ;
déterminer au moyen du second serveur d'application de service de messagerie que l'information de service de messagerie est une information de service de messagerie interne à la session ou une information de service de messagerie externe à la session en fonction d'informations de négociation de session de service de messagerie contenues dans la demande ; et
transmettre (S606), au moyen du second serveur d'application de service de messagerie, l'information de service de messagerie vers un réseau de domaine CS auquel appartient le récepteur d'informations de service de messagerie selon que l'information de service de messagerie est une information de service de messagerie interne à la session ou une information de service de messagerie externe à la session lorsque le récepteur d'informations de service de messagerie est un utilisateur de domaine CS classique.

2. Procédé de routage de service de messagerie selon la revendication 1, dans lequel la détermination du fait que l'information de service de messagerie est une information de service de messagerie interne à la session ou une information de service de messagerie externe à la session en fonction d'informations de négociation de session de service de messagerie contenues dans la demande comprend en outre le fait de :
déterminer que l'information de service de messagerie est une information de service de messagerie interne à la session ou une information de service de messagerie externe à la session en fonction d'un style des informations de négociation de session de service de messagerie contenues dans la demande.

3. Procédé de routage de service de messagerie selon la revendication 1, dans lequel l'étape consistant à transmettre (S606) l'information de service de messagerie au réseau auquel appartient le récepteur d'informations de service de messagerie comprend au moins l'une des étapes suivantes :
transmettre l'information de service de messagerie au réseau de service de messagerie du récepteur d'informations de service de messagerie ;
vérifier le format du contenu de l'information de service de messagerie et transmettre l'information de service de messagerie au réseau de service de messagerie multimédia du récepteur d'informations de service de messagerie lorsque le format de l'information de service de messagerie est de type multimédia ;
vérifier le format du contenu de l'information de service de messagerie et transmettre l'information de service de messagerie au réseau de service de messagerie textuel du récepteur d'informations de service de messagerie lorsque le format de l'information de service de messagerie est de type multimédia ;
vérifier le format du contenu de l'information de service de messagerie et transmettre l'information de service de messagerie au réseau de service de messagerie textuel du récepteur d'informations de service de messagerie lorsque le format de l'information de service de messagerie est de type texte ; et
vérifier le format du contenu de l'information de service de messagerie et transmettre l'information de service de messagerie au réseau de service de messagerie multimédia du récepteur d'informations de service de messagerie lorsque le format de l'information de service de messagerie est de type texte.

4. Procédé de routage de service de messagerie selon la revendication 1, dans lequel la transmission (S606) de l'information de service de messagerie à un réseau de domaine CS auquel appartient le récepteur d'informations de service de messagerie comprend en outre le fait de déterminer que le contenu de l'information de service de messagerie est de type multimédia et de transférer l'information de service de messagerie au réseau de service de messagerie multimédia auquel appartient le récepteur d'informations de service de messagerie au moyen du Protocole de Transfert Hypertexte lorsque le récepteur d'informations de service de messagerie est un utilisateur de domaine CS classique et lorsque l'information de service de messagerie est une information de service de messagerie externe à la session.

5. Procédé de routage de service de messagerie selon la revendication 1, dans lequel la transmission (S606) de l'information de service de messagerie à un réseau de domaine CS auquel appartient le récepteur d'informations de service de messagerie comprend en outre le fait de renvoyer une réponse d'établissement de session réussi pour établir une session entre l'émetteur d'informations de service de messagerie du réseau IMS et le processeur d'informations de service de messagerie du réseau IMS s'il est déterminé que l'information de service de messagerie est une information de service de messagerie interne à la session.

6. Système de routage de service de messagerie **caractérisé en ce qu'**il comprend :
un module de transmission d'informations de service de messagerie (510), configuré pour envoyer une demande, la demande acheminant une information de service de messagerie associée à un récepteur d'informations de service de messagerie ;
un module de sélection de voie d'acheminement d'informations de service de messagerie (530) configuré pour recevoir la demande et envoyer l'information de service de messagerie acheminée dans la demande, comprenant en outre :
un module d'évaluation de réseau de départ du récepteur d'informations de service de messagerie (520), configuré pour déterminer que le récepteur d'informations de service de messagerie appartient à un réseau de domaine CS sur la base d'une analyse d'un identifiant du récepteur d'informations de service de messagerie acheminé dans la demande en interrogeant une base de données d'un Serveur de Noms de Domaines ou une base de données d'Association de Numéros de Téléphone ou d'une vérification de la configuration locale du second serveur d'application de service de messagerie ; et
un module d'évaluation du procédé de transfert d'informations de service de messagerie (532), configuré pour évaluer si l'information de service de messagerie est transférée de façon interne à la session ou externe à la session ;
un module d'interface pour l'interfonctionnement des informations de service de messagerie (540), configuré pour recevoir l'information de service de messagerie et
envoyer l'information de service de messagerie au réseau de domaine CS auquel appartient le récepteur d'informations de service de messagerie selon que l'information de service de messagerie est transférée de façon interne à la session ou externe à la session lorsque le récepteur d'informations de service de messagerie appartient à un réseau de domaine CS ;
le module de transmission d'informations de service de messagerie (510) étant localisé dans un terminal utilisateur ou un premier serveur d'application de service de messagerie d'un réseau IMS et le module de sélection de voie d'acheminement d'informations de service de messagerie (530) et le module d'interface pour l'interfonctionnement des informations de service de messagerie (540) étant localisés dans un second serveur d'application de service de messagerie du réseau IMS.

7. Système de routage de service de messagerie selon la revendication 6, dans lequel, lorsque le module d'évaluation du réseau de départ du récepteur d'informations de service de messagerie (520) détermine que le réseau auquel appartient le récepteur d'informations de service de messagerie est un réseau CS, le module de sélection de voie d'acheminement d'informations de service de messagerie (530) transmet l'information de service de messagerie au module d'interface pour l'interfonctionnement des informations de service de messagerie (540).
